Europäisches Patentamt

European Patent Office

Office européen des brevets

(19)

(11) **EP 1 484 269 A1**

(12) **EUROPEAN PATENT APPLICATION**
published in accordance with Art. 158(3) EPC

(43) Date of publication:
08.12.2004 Bulletin 2004/50

(51) Int Cl.⁷: **B65G 27/16**, B65G 54/00

(21) Application number: 03744045.0

(86) International application number:
PCT/JP2003/002830

(22) Date of filing: 11.03.2003

(87) International publication number:
WO 2003/076313 (18.09.2003 Gazette 2003/38)

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 11.03.2002 JP 2002065366
11.03.2002 JP 2002065432
29.05.2002 JP 2002155189
28.06.2002 JP 2002189187
28.06.2002 JP 2002188996

(71) Applicant: IAI Corporation
Shimizu-shi, Shizuoka 424-0102 (JP)

(72) Inventors:
• FUJINAGA, Teruaki, c/o IAI CORPORATION
Shizuoka-shi, Shizuoka 424-0102 (JP)
• YAMASHITA, Yoshifumi, c/o IAI CORPORATION
Shizuoka-shi, Shizuoka 424-0102 (JP)

(74) Representative: Grünecker, August, Dipl.-Ing.
Patentanwälte
Grünecker, Kinkeldey, Stockmair & Partner
Maximilianstrasse 58
80538 München (DE)

(54) **ULTRASONIC LEVITATION DEVICE**

(57) An ultrasonic levitation device, comprising a fixed part and a movable part movably installed on the fixed part, wherein thin ultrasonic vibrators are installed on the fixed part or the movable part and, for example, floating surfaces are formed, in sloped surfaces, stacking piezoelectric elements are installed on the fixed part or the movable part, plate oscillating devices are installed on the fixed part or the movable part through pillar members, or the direction of ultrasonic vibration of the fixed part or the movable part is changed by a vibrating direction changing means, whereby the movable part can be floated through the floating surfaces by ultrasonic vibration of the fixed part or the movable part.

Fig. 1(a)

# Fig. 1(b)

**Description**

TECHNICAL FIELD

The present invention relates to an ultrasonic levitation device. In particular, the present invention relates to the ultrasonic levitation device comprising an improved structure of guide mechanism, which realizes the linear movement or plane surface guiding, and also improves the floating stability and floating rigidity without requiring the large-sizing of the device.

BACKGROUND ART

An ultrasonic levitation device, using ultrasonic vibration, has a contact-free mechanism and is free from environmental pollution due to abrasion or lubrication agent, and is considered to be appropriate for clean room environment or precision positioning purposes. There are several examples of this type of ultrasonic levitation device, such as those disclosed under Japanese Unexamined Patent Publication No. Hei 7-196127 and Japanese Unexamined Patent Publication No. Hei 11-301832. In particular, according to the Official Gazette of Japanese Unexamined Patent Publication No. Hei 7-196127 as discussed above, there has been disclosed an ultrasonic levitation device which uses an ultrasonic transducer called "Langevin type".

However, the conventional ultrasonic levitation devices discussed as above have the following problems.

According to the conventional ultrasonic levitation devices as disclosed in Japanese Unexamined Patent Publication No. Hei 7-196127 and Japanese Unexamined Patent Publication No. Hei 11-301832, in particular, there is no disclosure of any structure that is accompanied by linear movement guiding mechanism, and when the application of these inventions are intended, it will be impossible to accomplish the movement in a desirous direction with maintaining the stable floating of a movable part.

In addition, according to the conventional ultrasonic levitation devices as disclosed in Japanese Unexamined Patent Publication No. Hei 7-196127 and Japanese Unexamined Patent Publication No. Hei 11-301832, it is impossible to generate ultrasonic vibration at larger vibration amplitude, thus these devices will not accomplish the stable floating. In particular, there are several problems, such as that the volume of floating body would become larger, high preciseness of plane surface is required for floating surfaces, or the feedback control of floating height is required.

Further, according to the "Langevin type" of ultrasonic transducer as disclosed in Japanese Unexamined Patent Publication No. Hei 7-196127, the height of the device would become taller, and therefore it would be impossible to reduce the size of device. The taller shape of this device would also cause another problem of higher gravity center of a slider (movable part), which would spoil the stability of movement.

In the light of the above problems, it is an object of the present invention to provide an ultrasonic levitation device, which is provided with linear movement and plane surface guiding without requiring any complicated structure, and which also improves the floating stability and floating rigidity without requiring the large-sizing of the device.

DISCLOSURE OF INVENTION

To achieve the objects mentioned above, according to claim 1 of the present invention, there is provided an ultrasonic levitation device comprising, a fixed part, and a movable part which movably installed on the fixed part, so that the movable part can be floated through floating surfaces by ultrasonic vibration of the fixed part or the movable part, wherein thin ultrasonic vibrators are provided on the fixed part or the movable part.

According to claim 2 of the present invention, there is provided the ultrasonic levitation device as claimed in claim 1, wherein the floating surfaces are formed in sloped surfaces.

According to claim 3 of the present invention, there is provided the ultrasonic levitation device as claimed in claim 2, further comprising fixed part guides at the fixed part, and movable part guides at the movable part corresponding to the fixed part guides, wherein the fixed part guides are in a form of recessed or protruded shape, and the movable part guides are in a form of protruded or recessed shape.

According to claim 4 of the present invention, there is provided the ultrasonic levitation device as claimed in claim 2 or claim 3, further comprising a pair of fixed part guides for guiding the movable part on the right and left sides, wherein the pair of fixed part guides is provided with sloped floating surfaces spreading in the upward direction, and the movable part guides are provided with sloped floating surfaces on the right and left sides confronting the sloped floating surfaces of the pair of fixed side guides.

According to claim 5 of the present invention, there is provided the ultrasonic levitation device as claimed in claim 3, wherein the fixed part guides are in a form of recessed or protruded shape by two sloped surfaces, and the movable part guides are in a form of protruded or recessed shape by two sloped surfaces.

According to claim 6 of the present invention, there is provided the ultrasonic levitation device as claimed in any one claim of claims 1 to 5, wherein the fixed part or the movable part further comprising piezoelectric members.

According to claim 7 of the present invention, there is provided the ultrasonic levitation device as claimed in any one claim of claims 1 to 6, wherein the fixed part or the movable part further are provided with ultrasonic vibration sources by stacking piezoelectric elements.

According to claim 8 of the present invention, there is provided the ultrasonic levitation device as claimed in any one claim of claims 1 to 7, wherein a vibrator of the movable part makes ultrasonic vibration; and the vibrator further comprising, a vibration plate making ultrasonic vibration, and a pair of movable part guides provided on the right and left sides of the vibration plate, so that the thickness of the vibration plate and the thickness of the pair of movable part guides are different from each other.

According to claim 9 of the present invention, there is provided the ultrasonic levitation device as claimed in claim 8, wherein the vibration plate further comprising a piezoelectric material.

According to claim 10 of the present invention, there is provided the ultrasonic levitation device as claimed in claim 8 or claim 9, wherein the vibration plate and the pair of movable part guides are produced as separate parts.

According to claim 11 of the present invention, there is provided the ultrasonic levitation device as claimed in any one claim of claims 1 to 10, wherein the movable part further comprising a movable part body integrated with the vibrator through pillar members, in a form that the pillar members are positioned along the center axis of the vibrator.

According to claim 12 of the present invention, there is provided the ultrasonic levitation device as claimed in claim 11, wherein the pillar members are connected to projecting parts positioned to be projecting from ends of the vibrator.

According to claim 13 of the present invention, there is provided the ultrasonic levitation device as claimed in claim 12, wherein the width of connecting parts between the projecting parts and the vibration plates of the vibrator is narrower than the width of the projecting parts.

According to claim 14 of the present invention, there is provided the ultrasonic levitation device as claimed in any one claim of claims 1 to 13, further comprising sticking preventing projections at the fixed part or the movable part.

According to claim 15 of the present invention, there is provided the ultrasonic levitation device as claimed in any one claim of claims 11 to 14, wherein all or part of the pillar members comprising a viscous-elastic material.

According to claim 16 of the present invention, there is provided the ultrasonic levitation device as claimed in claim 1, wherein the ultrasonic vibrators are provided by stacking piezoelectric elements.

According to claim 17 of the present invention, there is provided the ultrasonic levitation device as claimed in claim 16, wherein the ultrasonic vibrators are provided not less than two at the fixed part or the movable part.

According to claim 18 of the present invention, there is provided the ultrasonic levitation device as claimed in claim 17, wherein the ultrasonic vibrators are provided not less than three.

According to claim 19 of the present invention, there is provided the ultrasonic levitation device as claimed in claim 17 or claim 18, wherein those ultrasonic vibrators are provided on the same circular line.

According to claim 20 of the present invention, there is provided the ultrasonic levitation device as claimed in claim 1, wherein the ultrasonic vibrators are plate oscillating devices attached to the fixed part or the movable part through pillar members.

According to claim 21 of the present invention, there is provided the ultrasonic levitation device as claimed in claim 20, wherein the plate oscillating devices are provided with bimorph piezoelectric elements or unimorph piezoelectric elements connected to vibration plates.

According to claim 22 of the present invention, there is provided the ultrasonic levitation device as claimed in claim 20 or claim 21, wherein the pillar members are provided not less than two.

According to claim 23 of the present invention, there is provided the ultrasonic levitation device as claimed in any one claim of claims 20 to 22, further comprising ribs on the plate oscillating devices.

According to claim 24 of the present invention, there is provided the ultrasonic levitation device as claimed in any one claim of claims 20 to 23, wherein the space between the pillar members or the ribs is set to be an integral multiple number of approximately half of a vibration wavelength.

According to claim 25 of the present invention, there is provided the ultrasonic levitation device as claimed in any one claim of claims 20 to 24, wherein the pillar members or the ribs are positioned at inner positions from outer edges of the plate oscillating devices.

According to claim 26 of the present invention, there is provided the ultrasonic levitation device as claimed in claim 25, wherein the space between the pillar members or the ribs and the outer edge of the plate oscillating devices is approximately quarter of or approximately multiple number of $\{1/4 + (1/2) \times n\}$ of a vibration wavelength, on condition that symbol "n" is set to be an integral number.

According to claim 27 of the present invention, there is provided the ultrasonic levitation device as claimed in claim 1, wherein the vibrating direction of ultrasonic vibration at the fixed part or the movable part is changed, through a vibrating direction changing means.

According to claim 28 of the present invention, there is provided the ultrasonic levitation device as claimed in claim 27, wherein the vibrating direction changing means changes the vibrating direction of ultrasonic vibration orthogonally.

According to claim 29 of the present invention, there is provided the ultrasonic levitation device as claimed in claim 28, wherein the direction of main vibration changed by the vibrating direction changing means is in one direction.

According to claim 30 of the present invention, there is provided the ultrasonic levitation device as claimed in claim 29, wherein the vibrating direction changing means further comprising a vibrating direction changing member in a form of letter L shape.

According to claim 31 of the present invention, there is provided the ultrasonic levitation device as claimed in claim 28, wherein the direction of main vibration changed by the vibrating direction changing means is in two directions.

According to claim 32 of the present invention, there is provided the ultrasonic levitation device as claimed in claim 31, wherein the vibrating direction changing means further comprising a vibrating direction changing member in a form of cross shape.

According to claim 33 of the present invention, there is provided the ultrasonic levitation device as claimed in any one claim of claims 27 to 32, further comprising vibrators provided with Langevin type ultrasonic transducers or sheet lamination type piezoelectric elements at the fixed part or the movable part.

According to claim 34 of the present invention, there is provided the ultrasonic levitation device as claimed in claim 33, wherein the Langevin type ultrasonic transducers or the sheet lamination type piezoelectric elements are in a form of prism shape.

According to claim 35 of the present invention, there is provided the ultrasonic levitation device as claimed in any one claim of claims 27 to 34, wherein the movable part further comprising a movable part body through pillar members, in a form that the pillar members are positioned substantially at the center of the vibrators or substantially at the center of the vibrating direction changing means.

Accordingly, in the case of the ultrasonic levitation device of the present invention, the thin ultrasonic vibrators are provided on the fixed part or the movable part, whereby the height of the device becomes lower, and the size of the device becomes smaller.

Preferably, the floating surfaces may be the sloped surfaces, whereby the movable part may be guided not only in the floating direction (i.e. in Z axis direction), but also in X axis direction perpendicular to Z axis direction. In other words, the present invention enables the linear movement guiding of the movable part, whereby the effective utilization of ultrasonic levitation device may be facilitated. Further, the structure for accomplishing any desired linear movement guiding is very simple, thus it is possible to accomplish the desired linear movement guiding without requiring large-sized device or complicated structure.

Preferably, the ultrasonic levitation device according to the present invention may be provided with the ultrasonic vibrators, by stacking piezoelectric elements, attached to the fixed part or the movable part.

Consequently, it is possible to generate ultrasonic vibration at larger vibration amplitude, thus the floating height may increase, whereby the allowance of preciseness of plane surface in regard to the floating surface of the fixed part may become wider, and more stable floating may be accomplished.

Preferably, the ultrasonic levitation device according to the present invention may be provided with the plate oscillating devices attached to the fixed part or the movable part through the pillar members, whereby the height of the device may become lower, and the size of the device may become smaller.

Preferably, the ultrasonic levitation device according to the present invention, the direction of the ultrasonic vibration at the fixed part or the movable part may be changed by the vibrating direction changing means. In other words, it is possible to change the vibrating direction by the vibrating direction changing means, whereby the direction of the vibration source may be determined arbitrarily. Therefore, for example, it is possible to place the vibration source in the horizontal direction, although the conventional vibration source should be placed to vibrate in the perpendicular direction. Accordingly, the height of the device may become lower, and the size of the device may become smaller, and in addition, it is also possible to improve the stability of movement.

BRIEF DESCRIPTION OF DRAWINGS

Figure 1 are views showing a structure of a first embodiment of the present invention, wherein Fig. 1 (a) is a plan view of an ultrasonic levitation device, and Fig. 1 (b) is a sectional view cut along the line b - b of Fig. 1 (a);

Figure 2 are views showing a structure of a second embodiment of the present invention, wherein Fig. 2 (a) is a plan view of an ultrasonic levitation device, and Fig. 2 (b) is a sectional view cut along the line b - b of Fig. 2 (a);

Figure 3 are views showing a structure of a third embodiment of the present invention, wherein Fig. 3 (a) is a plan view of an ultrasonic levitation device, and Fig. 3 (b) is a sectional view cut along the line b - b of Fig. 3 (a);

Figure 4 are views showing a structure of a fourth embodiment of the present invention, wherein Fig. 4 (a) is a plan view of an ultrasonic levitation device, and Fig. 4 (b) is a sectional view cut along the line b - b of Fig. 4 (a);

Figure 5 are views showing a structure of a fifth embodiment of the present invention, wherein Fig. 5 (a) is a plan view of an ultrasonic levitation device, and Fig. 5 (b) is a sectional view cut along the line b - b of Fig. 5 (a);

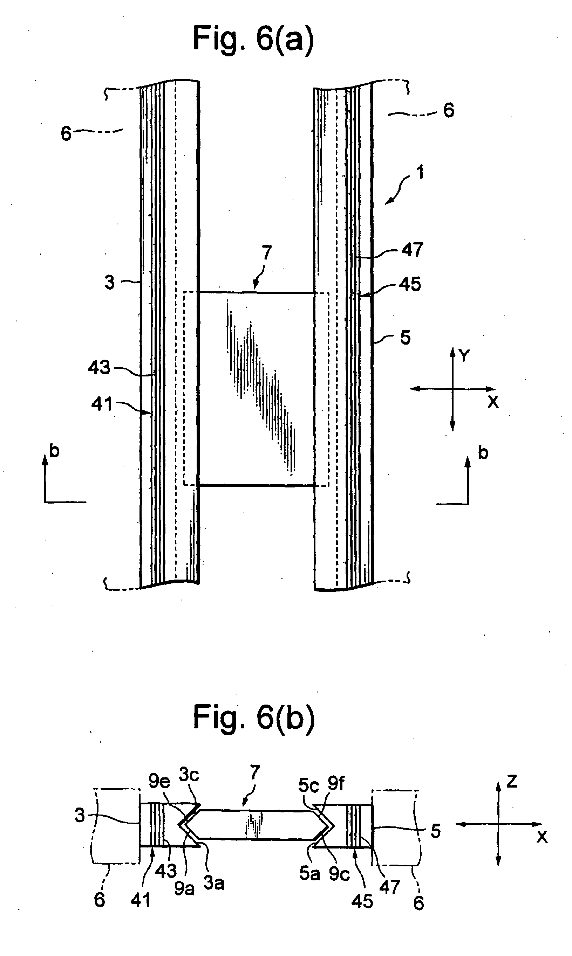

Figure 6 are views showing a structure of a sixth embodiment of the present invention, wherein Fig. 6 (a) is a plan view of an ultrasonic levitation device, and Fig. 6 (b) is a sectional view cut along the line b - b of Fig. 6 (a);

Figure 7 are views showing a structure of a seventh embodiment of the present invention, wherein Fig. 7 (a) is a plan view of an ultrasonic levitation device, and Fig. 7 (b) is a sectional view cut along the line b - b of Fig. 7 (a);

Figure 8 are views showing a structure of an eighth embodiment of the present invention, wherein Fig. 8 (a) is a plan view of an ultrasonic levitation device, and Fig. 8 (b) is a sectional view cut along the line b - b of Fig. 8 (a);

Figure 9 are views showing a structure of a ninth embodiment of the present invention, wherein Fig. 9 (a) is a plan view of an ultrasonic levitation device, and Fig. 9 (b) is a sectional view cut along the line b - b of Fig. 9 (a);

Figure 10 are views showing a structure of a tenth embodiment of the present invention, wherein Fig. 10 (a) is a plan view of an ultrasonic levitation device, and Fig. 10 (b) is a sectional view cut along the line b - b of Fig. 10 (a);

Figure 11 are views showing a structure of an eleventh embodiment of the present invention, wherein Fig. 11 (a) is a plan view of an ultrasonic levitation device, and Fig. 11 (b) is a sectional view cut along the line b - b of Fig. 11 (a);

Figure 12 are views showing a structure of the eleventh embodiment of the present invention, wherein Fig. 12 (a) is a side view of a movable part of an ultrasonic levitation device, Fig. 12 (b) is a sectional view cut along the line b - b of Fig. 12 (a), and Fig. 12 (c) is a view as seen by the arrows c - c of Fig. 12 (a);

Figure 13 are views showing a structure of the eleventh embodiment of the present invention, wherein Fig. 13 (a) is a side view of the movable part other than a movable part body, Fig. 13 (b) is a view as seen by the arrows b - b of Fig. 13 (a), Fig. 13 (c) is a view as seen by the arrows c - c of Fig. 13 (a), and Fig. 13 (d) is a sectional view cut along the line d - d of Fig. 13 (a);

Figure 14 is a view according to the eleventh embodiment of the present invention, showing a driving theory of a momentum generating device;

Figure 15 is a chart according to the eleventh embodiment of the present invention, showing a characteristic of the momentum generating device and a stopping device;

Figure 16 is a chart according to the eleventh embodiment of the present invention, showing a characteristic of the momentum generating device and the stopping device;

Figure 17 are views showing a structure of a twelfth embodiment of the present invention, wherein Fig. 17 (a) is a plan view of an ultrasonic levitation device, and Fig. 17 (b) is a sectional view cut along the line b - b of Fig. 17 (a);

Figure 18 are views showing a structure of a thirteenth embodiment of the present invention, wherein Fig. 18 (a) is a plan view of an ultrasonic levitation device, and Fig. 18 (b) is a sectional view cut along the line b - b of Fig. 18 (a);

Figure 19 are views showing a structure of a fourteenth embodiment of the present invention, wherein Fig. 19 (a) is a side view of a movable part of an ultrasonic levitation device, Fig. 19 (b) is a view as seen by the arrows b - b of Fig. 19 (a), and Fig. 19 (c) is a sectional view cut along the line c - c of Fig. 19 (a);

Figure 20 are views showing a structure of a fifteenth embodiment of the present invention, wherein Fig. 20 (a) is a side view of a movable part of an ultrasonic levitation device, Fig. 20 (b) is a view as seen by the arrows b - b of Fig. 20 (a), and Fig. 20 (c) is a sectional view cut along the line c - c of Fig. 20 (a);

Figure 21 are views showing a structure of a sixteenth embodiment of the present invention, wherein Fig. 21 (a) is a front view of an ultrasonic levitation device, and Fig. 21 (b) is a view as seen by the arrows b - b of Fig. 21 (a);

Figure 22 are views showing a structure of a seventeenth embodiment of the present invention, wherein Fig. 22 (a) is a front view of an ultrasonic levitation device, and Fig. 22 (b) is a view as seen by the arrows b - b of Fig. 22 (a);

Figure 23 are views showing a structure of an eighteenth embodiment of the present invention, wherein Fig. 23 (a) is a front view of an ultrasonic levitation device, and Fig. 23 (b) is a view as seen by the arrows b - b of Fig. 23 (a);

Figure 24 are views showing a structure of the eighteenth embodiment of the present invention, wherein Fig. 24 (a) is a view as seen by the arrows a - a of Fig. 23 (a), and Fig. 24 (b) is an expanded plan view of a part b of Fig. 24 (a);

Figure 25 are views showing a structure of a nineteenth embodiment of the present invention, wherein Fig. 25 (a) is a plan view of an ultrasonic levitation device, and Fig. 25 (b) is a view as seen by the arrows b - b of Fig. 25 (a);

Figure 26 are views showing a structure of the nineteenth embodiment of the present invention, wherein Fig. 26 (a) is a plan view of a plate oscillating device, Fig. 26 (b) is a view as seen by the arrows b - b of Fig. 26 (a), and Fig. 26 (c) is a chart showing a characteristic of ultrasonic vibration;

Figure 27 are views showing a structure of a twentieth embodiment of the present invention, wherein Fig. 27 (a) is a plan view of an ultrasonic levitation device, and Fig. 27 (b) is a view as seen by the arrows b - b of Fig. 27 (a);

Figure 28 are views showing a structure of a twenty-first embodiment of the present invention, wherein Fig. 28 (a) is a plan view of an ultrasonic levitation device, and Fig. 28 (b) is a view as seen by the arrows b - b of Fig. 28 (a);

Figure 29 are views showing a structure of the twenty-first embodiment of the present invention, wherein Fig. 29 (a) is a plan view of an ultrasonic levitation device, and Fig. 29 (b) is a view showing a relation between positions of pillar members or a rib and ultrasonic vibration;

Figure 30 are views showing a comparative example of the twenty-first embodiment of the present invention, wherein Fig. 30 (a) is a plan view of an ultrasonic levitation device, and Fig. 30 (b) is a view showing a relation between positions of pillar members or a rib and ultrasonic vibration;

Figure 31 are views showing a structure of a twenty-second embodiment of the present invention, wherein Fig. 31 (a) is a plan view of an ultrasonic levitation device, and Fig. 31 (b) is a view as seen by the arrows b - b of Fig. 31 (a);

Figure 32 are views showing a structure of a twenty-third embodiment of the present invention, wherein Fig. 32 (a) is a plan view of an ultrasonic levitation device, and Fig. 32 (b) is a sectional view cut along the line b - b of Fig. 32 (a);

Figure 33 are views showing a structure of the twenty-third embodiment of the present invention, wherein Fig. 33 (a) is a side view of a movable part, Fig. 33 (b) is a view as seen by the arrows b - b of Fig. 33 (a), Fig. 33 (c) is a front view of the movable part, and Fig. 33 (d) is a sectional view cut along the line d - d of Fig. 33 (a);

Figure 34 are views showing a structure of the twenty-third embodiment of the present invention, wherein Fig. 34 (a) is a side view of the movable part other than a movable part body, Fig. 34 (b) is a view as seen by the arrows b - b of Fig. 34 (a), Fig. 34 (c) is a view as seen by the arrows c - c of Fig. 34 (a), and Fig. 34 (d) is a view as seen by the arrows d - d of Fig. 34 (a);

Figure 35 are views showing a structure of a twenty-fourth embodiment of the present invention, wherein Fig. 35 (a) is a plan view of an ultrasonic levitation device, Fig. 35 (b) is a view as seen by the arrows b - b of Fig. 35 (a), and Fig. 35 (c) is a view as seen by the arrows c - c of Fig. 35 (a); and

Figure 36 are views showing a structure of a twenty-fifth embodiment of the present invention, wherein Fig. 36 (a) is a plan view of an ultrasonic levitation device, Fig. 36 (b) is a view as seen by the arrows b - b of Fig. 36 (a), and Fig. 36 (c) is a view as seen by the arrows c - c of Fig. 36 (a).

BEST MODE FOR CARRYING OUT THE INVENTION

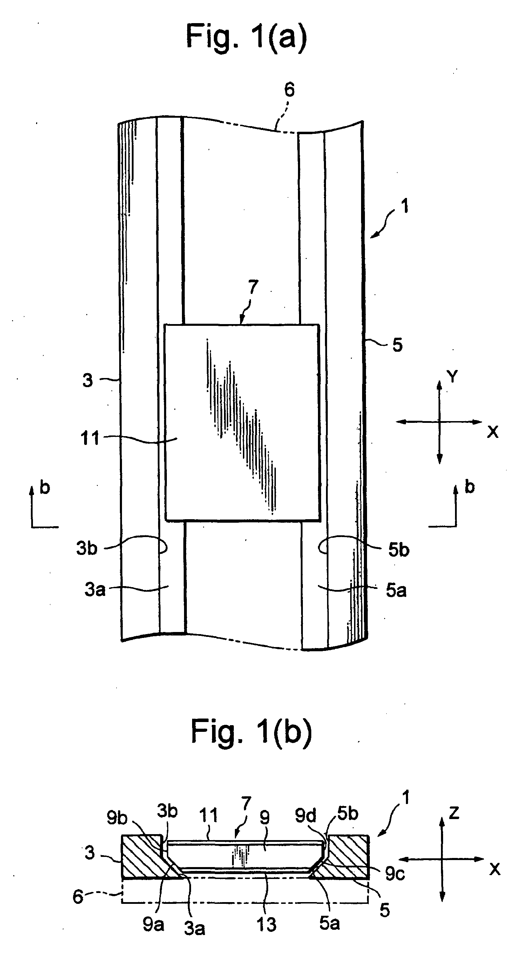

A first embodiment of the present invention will be explained with reference to Fig. 1. Fig. 1 are views showing a conceptional structure of an ultrasonic levitation device according to the first embodiment of the present invention, wherein Fig. 1 (a) is a partial plan view of the ultrasonic levitation device, and Fig. 1 (b) is a sectional view cut along the line b - b of Fig. 1 (a). There is a fixed part 1, comprising a left guide member 3 and a right guide member 5. The left guide member 3 has a left sloped floating surface 3a, and also a vertical surface 3b above the left sloped floating surface 3a.

Similarly, the right guide member 5 has a right sloped floating surface 5a, and also a vertical surface 5b above the right sloped floating surface 5a. The left guide member 3 and the right guide member 5 are attached to a base member 6 (shown by imaginary lines). The left guide member 3 and the right guide member 5 are elongated in the upward and downward directions of Fig. 1 (a), that is, in Y axis direction.

There is a movable part 7 to be movable in Y axis direction, positioned between the left guide member 3 and the right guide member 5. The movable part 7 comprises a vibration plate 9, and electrode parts 11, 13 are respectively attached to the upper and lower surfaces of the vibration plate 9. The vibration plate 9 itself comprises a piezoelectric material. The movable part 7 has a left sloped floating surface 9a and a vertical surface 9b, corresponding to the left sloped floating surface 3a and the vertical surface 3b of the left guide member 3 of the fixed part 1 as discussed above, and also has a right sloped floating surface 9c and a vertical surface 9d corresponding to the right sloped floating surface 5a and the vertical surface 5b of the right guide member 5.

When the movable part 7 makes ultrasonic vibration, the movable part 7 is floated against the fixed part 1, i.e. against the left guide member 3 and the right guide member 5, in the upward direction of Fig. 1 (b) (Z axis direction). Fig. 1 (b) illustrates a state that the movable part 7 is floated. Thereafter, when a driving force to move the movable part 7 in Y axis direction is applied, the movable part 7 may move to any side along Y axis direction.

The present embodiment has the following merits.

First, the left sloped floating surface 3a and the right sloped floating surface 5a are respectively provided on the left guide member 3 and the right guide member serving as the fixed part 1, and further, the left sloped floating surface 9a and the right sloped floating surface 9c are also provided on the movable part 7, so that the all floating surfaces are sloped surfaces. Thus, the movable part 7 may be guided not only in Z axis direction as the floating direction, but also in X axis direction perpendicular to Z axis direction. In other words, the linear movement guiding is accomplished, whereby the effective utilization of the ultrasonic levitation device may be facilitated.

Second, the structure for accomplishing any desired linear movement guiding is very simple, thus it is possible to accomplish the desired linear movement guiding without requiring large-sized device or complicated structure.

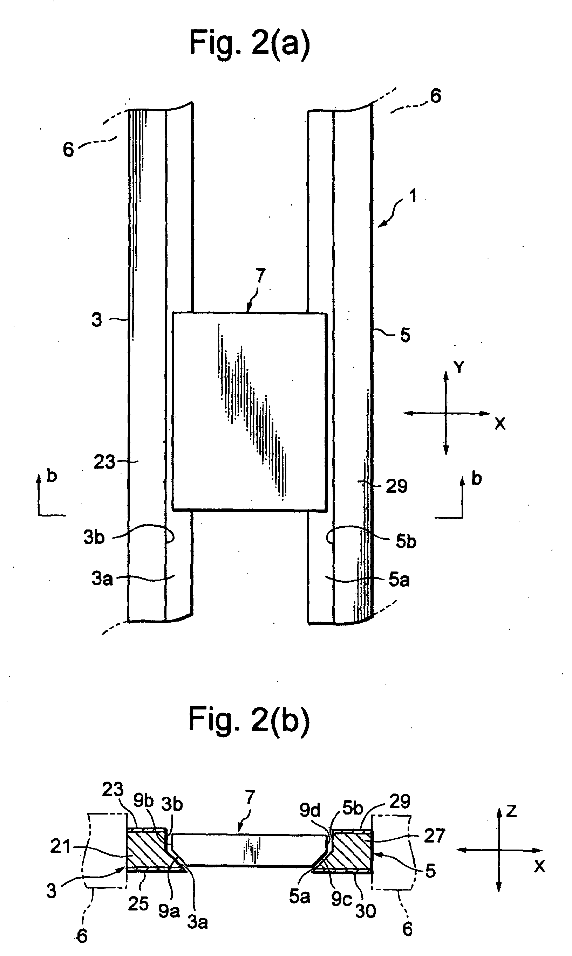

Now a second embodiment of the present invention will be explained with reference to Fig. 2. Although the first embodiment as discussed above has the structure of generating ultrasonic vibration on the side of the movable part 7, according to the second embodiment, the fixed part 1 makes ultrasonic vibration.

The left guide member 3 serving as the fixed part 1 is provided, with a guide member body 21, and with electrode parts 23, 25 respectively attached to the upper and lower surfaces of the guide member body 21. The guide member body 21 itself comprises a piezoelectric material.

Similarly, the right guide member 5 also serving as the fixed part 1 is provided, with a guide member body 27, and with electrode parts 29, 30 respectively attached to the upper and lower surfaces of the guide member body 27. The guide member body 27 itself also comprises a piezoelectric material.

The other structure is substantially the same as that of the first embodiment as discussed above, and the identical numerals are allotted to the identical elements, and the explanation thereof will not be made.

According to the second embodiment, likewise the case of the first embodiment, it is possible to accomplish a desired linear movement guiding, whereby more effective utilization as the ultrasonic levitation device can be made.

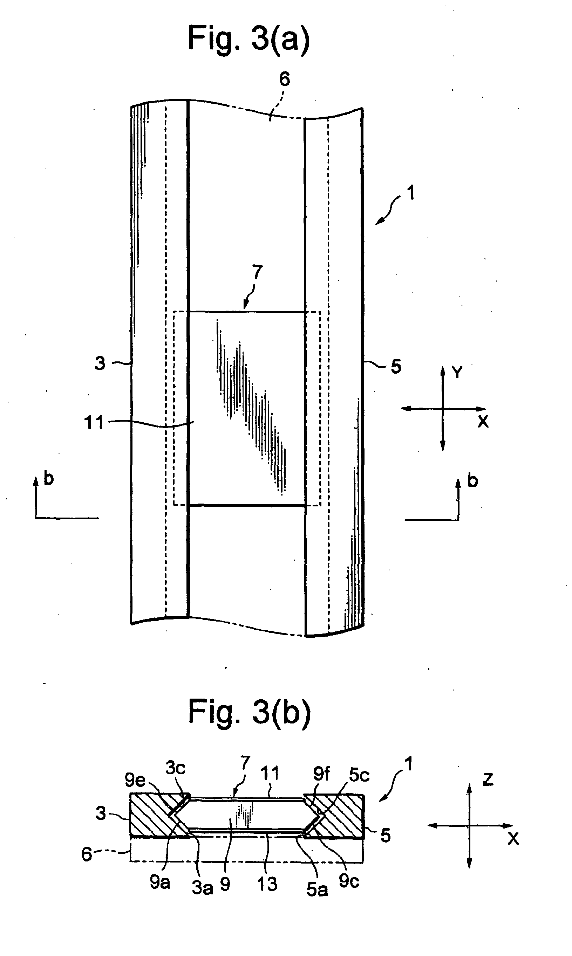

Now a third embodiment of the present invention will be explained with reference to Fig. 3. According to the third embodiment, under the structure of the first embodiment, the vertical surface 3b of the left guide member 3 of the fixed part 1 has been changed to a sloped surface 3c, and the vertical surface 5b of the right guide member 5 has been changed to a sloped surface 5c. Corresponding to these changes, the vertical surfaces 9b, 9d of the movable part 7 have been changed to sloped surfaces 9e, 9f.

The other structure is substantially the same as that of the first embodiment as discussed above, and the identical numerals are allotted to the identical elements, and the explanation thereof will not be made.

According to the third embodiment, substantially the same effect as that of the first embodiment can be accomplished, and in addition, it is possible to improve the stability of the linear movement guiding. That is to say, although there will be no need to provide any guide in the upper portion of Z axis direction because of the own weight, when the limitation is also made from the upper portion, it is possible to improve the stability.

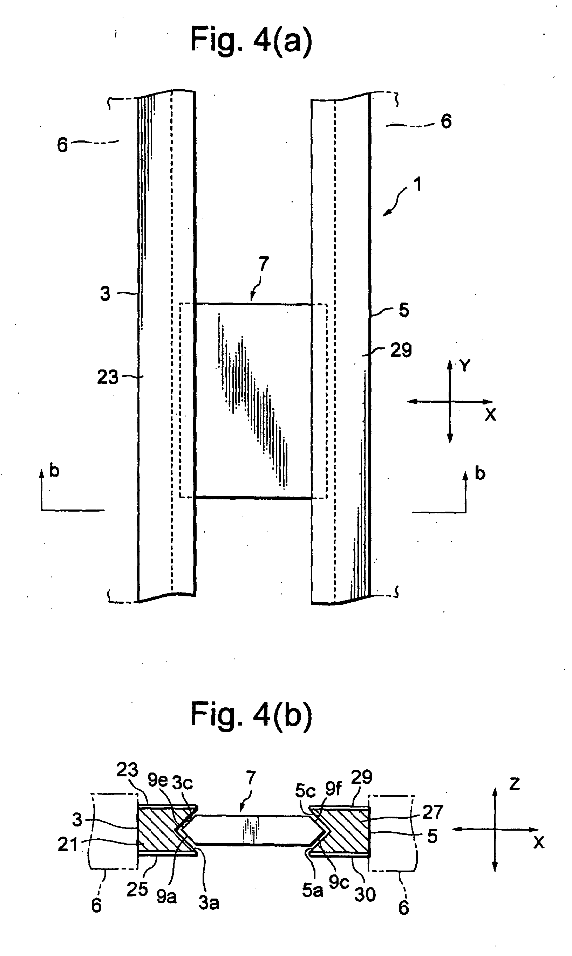

Now a fourth embodiment of the present invention will be explained with reference to Fig. 4. According to the fourth embodiment, under the structure of the second embodiment, the vertical surface 3b of the left guide member 3 of the fixed part 1 has been changed to a sloped surface 3c, and the vertical surface 5b of the right guide member 5 has been changed to a sloped surface 5c. Corresponding to these changes, the vertical surfaces 9b, 9d of the movable part 7 have been changed to sloped surfaces 9e, 9f.

The other structure is substantially the same as that of the second embodiment as discussed above, and the identical numerals are allotted to the identical elements, and the explanation thereof will not be made.

According to the fourth embodiment, substantially the same effect as that of the second embodiment can be accomplished, and in addition, it is possible to improve the stability of the linear movement guiding.

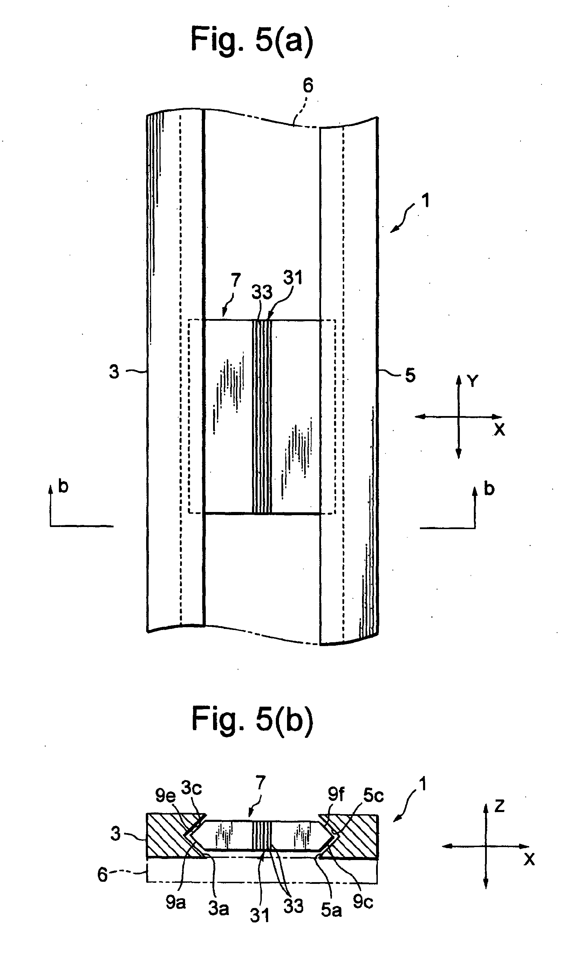

Now a fifth embodiment of the present invention will be explained with reference to Fig. 5. Although the first through fourth embodiments as discussed above illustrate examples in which the fixed part 1 itself or the movable part 7 itself comprises the piezoelectric material, according to the fifth embodiment, an ultrasonic vibration source by stacking piezoelectric elements is incorporated in the movable part 7.

There is an ultrasonic vibration source 31 incorporated in the movable part 7, and the ultrasonic vibration source 31 comprises a plurality of staking piezoelectric elements 33. The ultrasonic vibration source 31 having the above structure generates ultrasonic vibration, whereby the movable part can be floated.

According to the fifth embodiment, it is possible to accomplish substantially the same effects as those of the first through fourth embodiments, and in addition, it is possible to obtain larger amplitude of ultrasonic vibration by incorporating the staking piezoelectric elements 33. That is to say, according to the prior art, it is impossible to obtain larger amplitude, because the practical driving voltage applied to electrodes cannot become higher. On the other hand, when the ultrasonic vibration source 31 by stacking the piezoelectric elements 33 is adopted, for the purpose of obtaining the same vibration amplitude, it is sufficient to require the driving voltage in proportion to the thickness. Consequently, it is possible to obtain larger vibration amplitude by applying practically available driving voltage, whereby the floating height may increase, and the stability of floating may be also improved.

Now a sixth embodiment of the present invention will be explained. In the fifth embodiment as discussed above, the ultrasonic vibration source 31 is incorporated in the movable part 7. On the other hand, according to the sixth embodiment, the ultrasonic vibration sources are provided in the left guide member 3 and the right guide member 5 of the fixed part 1.

There is an ultrasonic vibration source 41 incorporated in the left guide member 3. The ultrasonic vibration source 41 comprises a plurality of stacking piezoelectric elements 43. Similarly, there is another ultrasonic vibration source 45 incorporated in the right guide member 5. The ultrasonic vibration source 45 also comprises a plurality of stacking piezoelectric elements 47.

Accordingly, when the ultrasonic vibration sources 41, 45 are respectively provided in the left guide member 3 and the right guide member 5 of the fixed part 1, substantially the same effect as above may be accomplished.

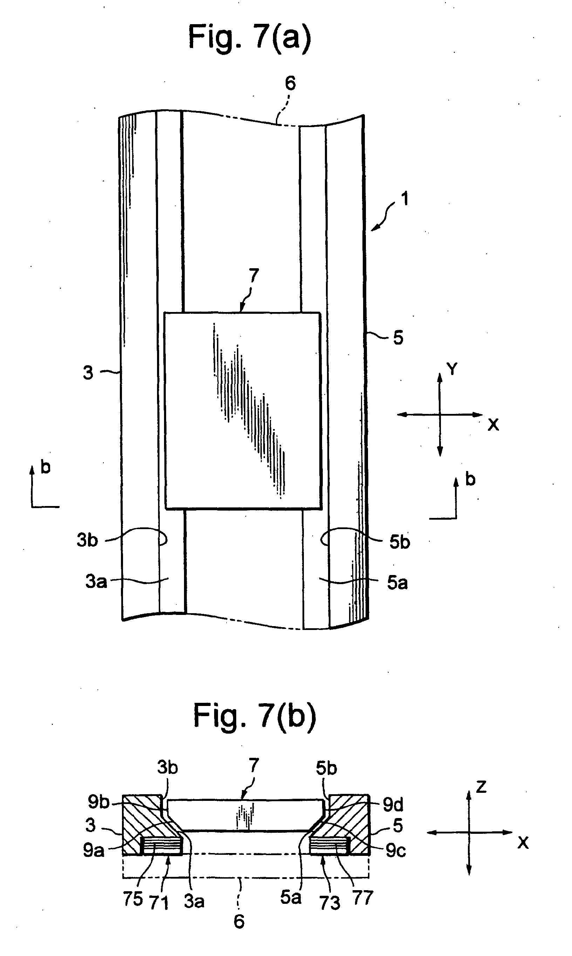

Now a seventh embodiment of the present invention will be explained with reference to Fig. 7. In the seventh embodiment, there are ultrasonic vibration sources 71, 73, respectively provided in the left guide member 3 and the right guide member 5 of the fixed part 1. The ultrasonic vibration source 71 comprises a plurality of stacking piezoelectric elements 75. Similarly, the ultrasonic vibration source 73 comprises a plurality of staking piezoelectric elements 77.

Accordingly, substantially the same effects as those of the above embodiments may be accomplished, and in addition, because the left guide member 3 and the right guide member 5 of the fixed part 1, and the ultrasonic vibration sources 71, 73 may be produced and incorporated as separate parts, the production will become easier, and the production cost may be reduced. Further, the production quality may be also improved.

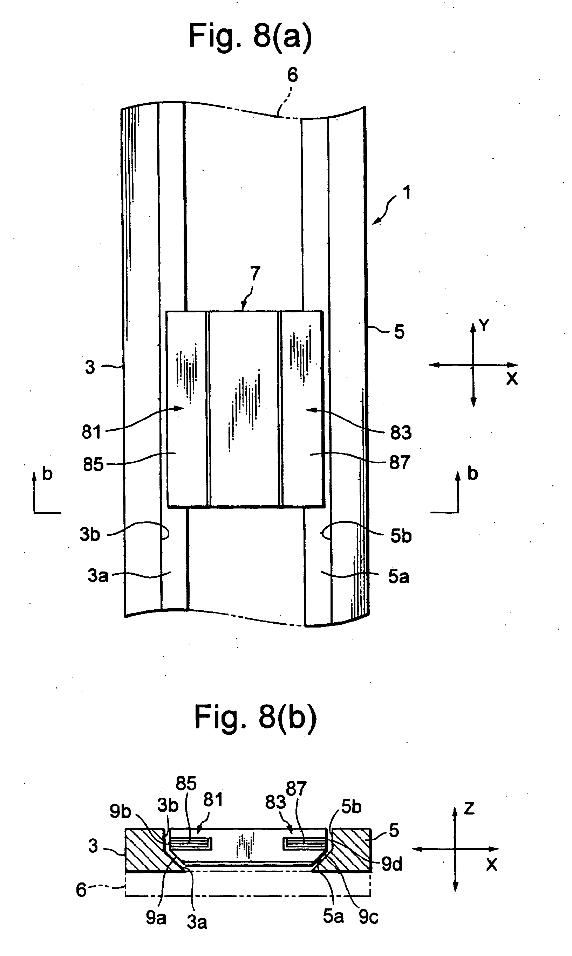

Now an eighth embodiment of the present invention will be explained with reference to Fig. 8. According to the eighth embodiment, there are ultrasonic vibration sources 81, 83 respectively provided on the left and right sides of the movable part 7. The ultrasonic vibration source 81 comprises a plurality of stacking piezoelectric elements 85. Similarly, the ultrasonic vibration source 83 comprises a plurality of staking piezoelectric elements 87.

Accordingly, substantially the same effects as those of the above embodiments may be accomplished, and in addition, because the movable part 7, and the ultrasonic vibration sources 81, 83 may be produced and incorporated as separate parts, the production will become easier, and the production cost may be reduced. Further, the production quality may be also improved.

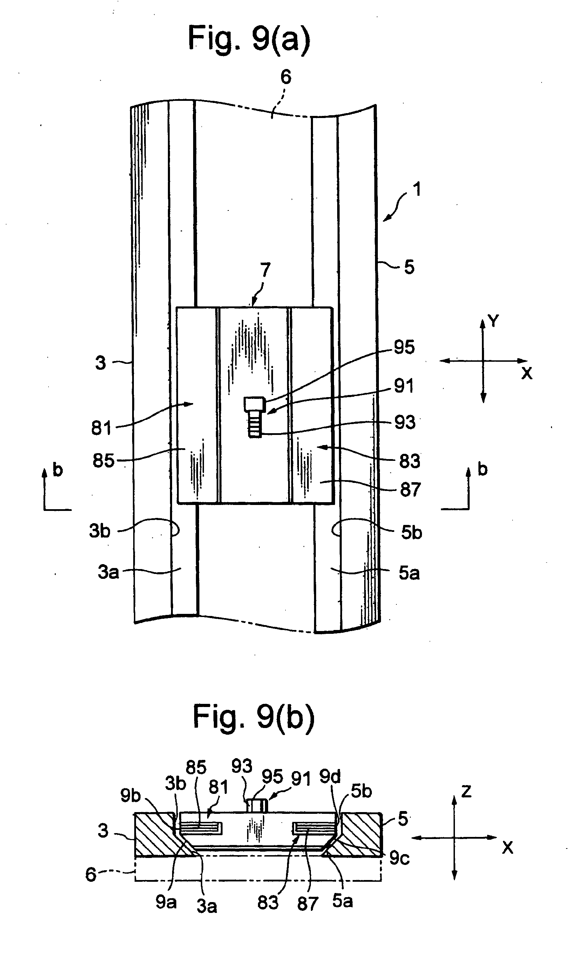

Now a ninth embodiment of the present invention will be explained with reference to Fig. 9. According to the ninth embodiment, under the structure of the ultrasonic levitation device in the eighth embodiment, there is an ultrasonic impact generating device 91 attached to the movable part 7. The ultrasonic impact generating device 91 comprises a piezoelectric actuator 93 and a plummet 95. When this type of ultrasonic impact generating device 91 is used, the impact force can be generated in Y axis direction, which is the moving direction of the movable part 7, whereby the driving force to move the movable part 7 may be obtained. When the movable part 7 is stopped, by vibrating the impact force in the front and rear directions, more accurate positioning can be accomplished.

Basically, this type of ultrasonic levitation device has contact-free floating structure, thus the friction between the fixed part 1 and the movable part 7 is very small, which would cause a problem of difficulty in stable stopping of the movable part 7 at a desired position. Thus, when the impact is generated and the repeated vibration is applied by the ultrasonic impact generating device 91, the damping energy may increase, and the unstable disturbance may become relatively smaller by applying kinetic energy, whereby the stable stop positioning may be accomplished.

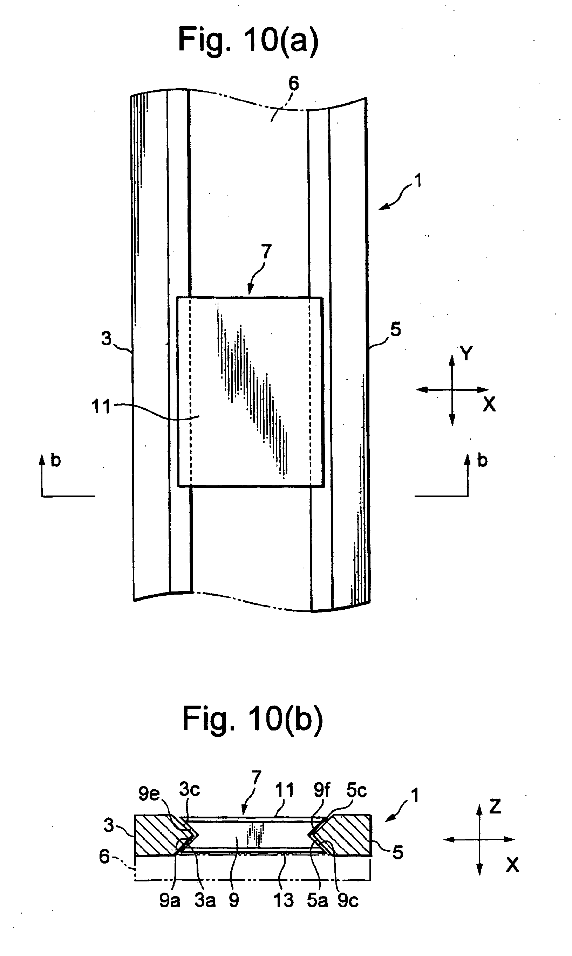

Now a tenth embodiment of the present invention will be explained with reference to Fig. 10. According to the tenth embodiment, the structure of the recessed part and the protruded part of the guide members of the third embodiment is reversed in relation to the fixed part 1 and the movable part 7.

In regard to the left guide member 3 of the fixed part 1, the sloped surface 3a and the sloped surface 3c are formed in a protruded shape, and similarly, in regard to the right guide member 5 of the fixed part 1, the sloped surface 5a and the sloped surface 5c are formed in a protruded shape. Corresponding to these shapes, a left guide of the movable part 7 is formed in a recessed shape by the sloped surfaces 9a, 9e, and similarly, a right guide of the movable part 7 is formed in a recessed shape by the sloped surfaces 9c, 9f.

As discussed above, when the fixed part 1 is formed in a protruded shape, and when the movable part 7 is formed in a recessed shape, substantially the same effect may be accomplished.

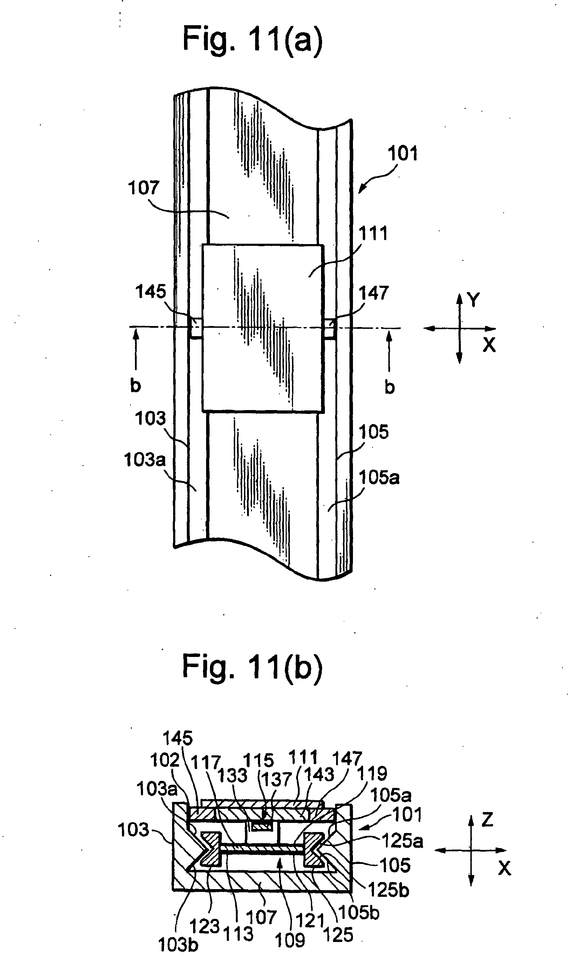

Now an eleventh embodiment of the present invention will be explained with reference to Figs. 11 through 16.

Fig. 11 are views showing a structure of an ultrasonic levitation device according to the eleventh embodiment, wherein Fig. 11 (a) is a partial plan view of the ultrasonic levitation device, and Fig. 11 (b) is a sectional view cut along the line b - b of Fig. 11 (a).

There is a fixed part 101, of which cross section shape is substantially in a letter of U, having a U-shaped groove 102. The U-shaped groove 102 is provided with a left guide 103 and a right guide 105 on the left and right sides respectively, and the left guide 103 and the right guide 105 are connected by a bottom plate part 107.

The left guide 103 has an upper sloped floating surface 103a and a lower sloped floating surface 103b, so that the left guide 103 is formed and positioned as an inwardly protruded shape by the upper sloped floating surface 103a and the lower sloped floating surface 103b. Similarly, the right guide 105 has an upper sloped floating surface 105a and a lower sloped floating surface 105b, so that the right guide 105 is also formed and positioned as an inwardly protruded shape by the upper sloped floating surface 105a and the lower sloped floating surface 105b.

There is a movable part 109 inside the U-shaped groove 102. The movable part 109 may be floated in Z axis direction of Fig. 11 (b), and placed to be movable in Y axis direction of Fig. 11 (a). The movable part 109 chiefly comprises, a movable part body 111, a vibrator 113, a momentum generating device 115 and a stopping device 141. The vibrator 113 comprises, a vibration plate 117, electrodes 119, 121 respectively provided on the upper and lower surfaces of the vibration plate 117, and guides 123, 125 respectively provided on the left and right sides of the vibration plate 117. The vibration plate 117 comprises a piezoelectric material. The left and right sides of the vibrator 113 are both formed in recessed shapes, respectively corresponding to the shapes of the left guide 103 and the right guide 105 of the fixed part 101 as discussed above. There is a left guide 123 on the left side of the vibrator 113, formed in a recessed shape by an upper sloped floating surface 123a and a lower sloped floating surface 123b. Similarly, there is also a right guide 125 on the right side of the vibrator 113, formed in a recessed shape by an upper sloped floating surface 125a and a lower sloped floating surface 125b.

When the vibrator 113 as discussed above generates ultrasonic vibration, as illustrated in Fig. 11 (b), the movable part 109 is floated in Z axis direction.

The detailed structure of the movable part 109 will be discussed. As is clear from the drawings, according to the eleventh embodiment, in regard to the movable part 109, as compared with the thickness of the left guide and the right guide, the thickness of the vibration plate 117 is thinner. The explanation will be now made in detail as to this point.

First, in regard to this type of ultrasonic levitation device, when the floating stability and floating rigidity should be improved, it is necessary to increase the area of sloped floating surfaces. Accordingly, when the thickness of the vibration plate 9 of Fig. 10 is increased, the thickness of the left guide and the right guide respectively provided on the left and right of thereof is also increased, whereby the area of the sloped floating surfaces may increase.

However, where the thickness of the vibration plate 9 is merely increased, provided that the driving voltage is the same, the applied voltage per unitary thickness will become lower, whereby the vibration amplitude would become smaller. Consequently, because the vibration amplitude becomes smaller, in spite of the increased area of the sloped floating surfaces, the floating force cannot be increased, and eventually, the floating stability and the floating rigidity cannot be improved.

To cope with this situation, it may be possible to increase the applied voltage in proportion to the increase of the thickness of the vibration plate 9, but this would require a large-sized driving power supply, and also require some measure against electric discharge. These factors would become serious obstacles to downsizing and cost reduction of products.

Therefore, according to the present embodiment as illustrated in Fig. 11, the thickness of the left guide 123 and the right guide 125, and the thickness of the vibration plate 117, are different from each other, so that the above problem will not occur, and the floating stability and the floating rigidity may be improved. In particular, when the area of the sloped floating surfaces should be increased, it is simply possible by increasing the thickness of the left guide 123 and the right guide 125. Further, when the vibration amplitude of the vibrator 113 should be increased, it is simply possible by decreasing the thickness of the vibration plate 117 only.

For reference, according to the present embodiment, the thickness of the left guide 123 and the right guide 125 is not changed, and only the thickness of the vibration plate 117 is decreased, in order to increase the vibration amplitude. According to this structure, it is possible to increase the floating force, whereby the floating stability and the floating rigidity may be improved.

As discussed above, the movable part 109 is provided with the momentum generating device 115. In particular, there is the movable part body 111 as discussed above, through a pair of pillar members 131, 133, above the vibration plate 117 of the vibrator 113, and there is the momentum generating device 115 as discussed above, fixed on the lower surface of the movable part body 111. The momentum generating device 115 comprises, a fixing member 135 fixed on the lower surface of the movable part body 111, an actuator 137 attached to the fixed member 135, and a plummet 139 attached to an end of the actuator 137. The actuator 137 and the plummet 139 are placed with having a space, in order not to become in contact with any other structural member by expansion and contraction of the actuator 137.

The actuator 137 is a piezoelectric sheet lamination type actuator, formed by stacking piezoelectric elements. However, it is not necessary to provide any sheet lamination type actuator, but it is also possible to use a single sheet type actuator.

According to the present embodiment, the actuator 137 using piezoelectric elements has been described as an example. However, the actuator is not limited to that using piezoelectric elements, and it is possible to use any other actuator, as long as the actuator makes the expansion and contraction. For example, it is possible to use any type of actuator, such as that using electromagnetic solenoid, air cylinder, etc.

Basically, the material of the plummet 139 is not limited, and it is possible to use, for example, iron, aluminum, copper, etc. The plummet 139 may also be made of any non-metal material.

There is the stopping device 141 attached to the movable part 109. The stopping device 141 comprises, an actuator 143 attached to the movable part body 111, and stopper members 145, 147 respectively attached to the both sides of the actuator 143.

Likewise the case of the actuator 137 of the momentum generating device 115 as discussed above, the actuator 143 is a piezoelectric sheet lamination type actuator, formed by stacking piezoelectric elements. However, it is not necessary to provide any sheet lamination type actuator, but it is also possible to use a single sheet type actuator.

According to the present embodiment, the actuator 143 using piezoelectric elements has been described as an example. However, the actuator is not limited to that using piezoelectric elements, and it is possible to use any other actuator, as long as the actuator makes the expansion and contraction. For example, it is possible to use any type of actuator, such as that using electromagnetic solenoid, air cylinder, etc.

The stopper members 145, 147 comprise a viscous-elastic material, for example polyacetar resin. When this type of viscous-elastic material is used, the impact during occurrence of stopping function may be relieved, and the occurrence of noise or abrasion particles may also be prevented.

When the stopping device 141 is actuated (turned ON), the voltage applied to the actuator 143 is "0". Accordingly, the actuator 143 returns to the original expanded state, whereby the stopper members 145, 147 are pressed against the inner walls of the U-shaped groove 102 of the fixed part 101. In other words, the stopper function is performed. On the other hand, when the stopping device 141 is not actuated (turned OFF), a voltage is applied to the actuator 143. Accordingly, the actuator 143 is contracted by the applied voltage, whereby the pressing of the stopper members 145, 147 against the U-shaped groove 102 of the fixed part 101 is released.

Now the driving theory by the momentum generating device 115 and the stopping device 141 will be explained with reference to Figs. 11 through 14.

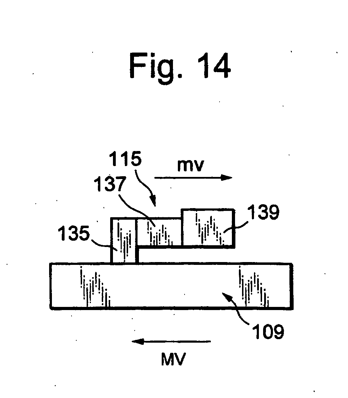

For reference, the structure as illustrated in Fig. 14 is somewhat different from those as illustrated in Figs. 11 through 13, because Fig. 14 chiefly serves to explain the driving theory of the momentum generating device 115.

As illustrated in Fig. 14, the actuator 137 of the momentum generating device 115 is driven to be expanded, whereby the plummet 139 moves toward the right side of Fig. 14. The movement of the plummet 139 generates a momentum (mv) in the same direction, on condition that:

> m: weight of the momentum generating device 115, and
> v: speed of the momentum generating device 115.

When the momentum (mv) is generated, according to law of conservation of momentum as shown by formula (I) below, there is another momentum (MV) in the reverse direction generated in the movable part 109, on condition that:

> M: weight of the movable part 109, and
> V: speed of the movable part 109.

$$mv + MV = 0 \qquad (I)$$

Accordingly, the movable part 109 moves in the reverse direction, at the speed (V) as shown by formula (II) below:

$$V = - (m/M) \times v \qquad (II)$$

In the next movement, the expanded actuator 137 will be contracted, so that the moved plummet 139 may return to the original position. In this case, according to the same driving theory as discussed above, with reference to Fig. 14, the movable part 109 once moved toward the left side, would return toward the right side. Thus, the stopping device 141 is turned ON. In other words, when the voltage applied to the actuator 143 of the stopping device 141 is turned OFF, the actuator 143 becomes expanded, whereby the stopper members 145, 147 at the both sides are pressed against the inner wall of the U-shaped groove 102 of the fixed part 101, thus the stopper function is performed. Consequently, the motion of the movable part 109 to return to the original position is prohibited. When the actuator 137 of the momentum generating device 115 is contracted, the movable part 109 is stopped. Thus, by repeating this motion, the movable part 109 may be moved in a desired direction.

An additional explanation will be made with reference to the driving theory as discussed above. Basically, the movable part 109 cannot be moved without the stopping device 141. Without the stopping device 141, the movable part 109 would repeat the forward and rearward movements by the expansion and contraction of the momentum generating device 115, and eventually, the movable part 109 could not make the forward movement. Therefore, as discussed above, it is necessary to stop the movement of the movable part 109 by the stopping device 141, in any movement in forward or rearward direction.

Now the pillar members 131, 133, as discussed above, will be explained in detail. According to the present embodiment, the pair of pillar members 131, 133 is provided along the center axis of the vibrator 113. This is because of the following reason. In regard to the vibration plate 117 of the vibrator 113, when a voltage is applied in the direction of the thickness, the vibration chiefly in the direction of the width is generated. Therefore, the vibration amplitude of the vibration plate 117 along the center axis thereof, in the direction of the width, is "0". Accordingly, the pair of pillar members 131, 133 is positioned along the center axis of the vibrator 133, whereby the supporting function may be performed without interfering with the vibration of the vibrator 113.

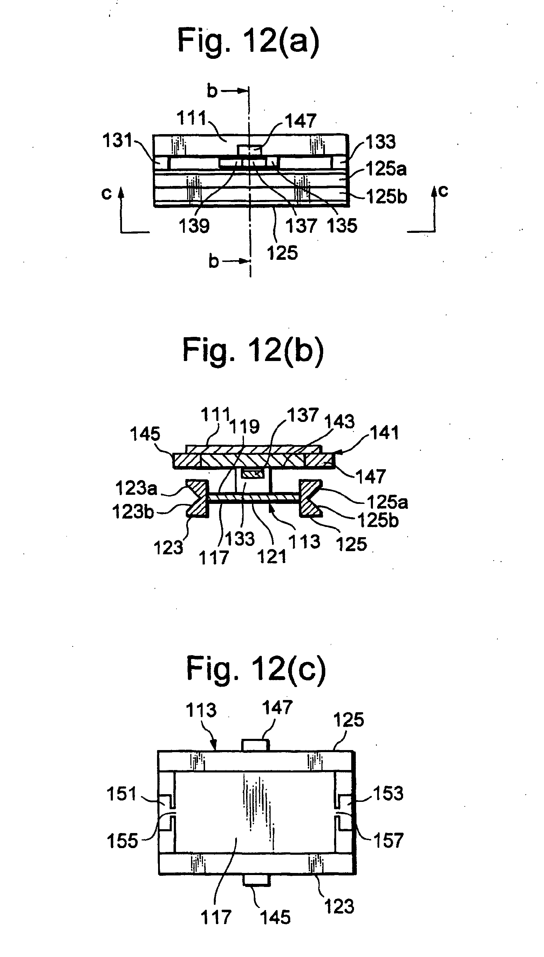

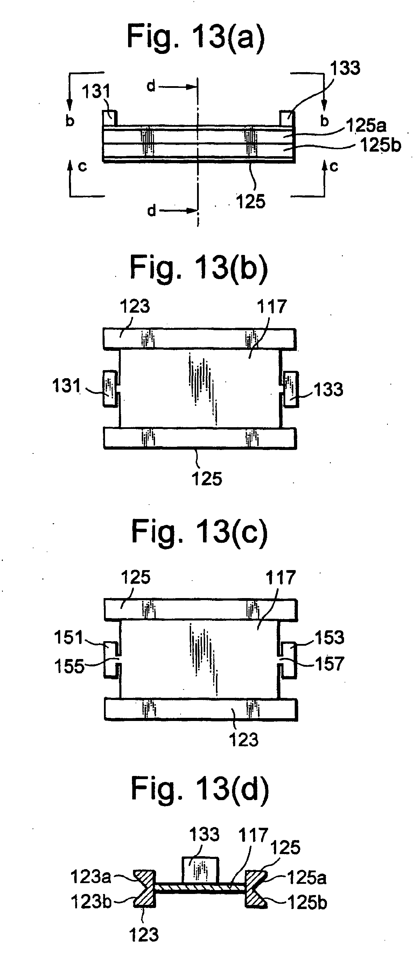

According to the present embodiment, the pillar members 131, 133 have an improved structure. As illustrated in Fig. 12 (c), Fig. 13 (b) and (c), the both sides of the vibration plate 117 respectively have narrow projecting parts 151, 153, and the pair of pillar members 131, 133 is provided on these projecting parts 151, 153. As discussed above, the pair of pillar members 131, 133 is positioned along the center axis of the vibrator 113 in order to reduce the interference with the vibration of the vibrator 113, but because of the width of the pillar members 131, 133, there may be the interference with the vibration of the vibrator 113 within the width thereof. Thus, the projecting parts 151, 153 and the vibration plate 117 are connected to each other through constricted parts 155, 157, whereby the above interference may be minimized.

The function of the present embodiment will now be explained according to the above structure.

With reference to Figs. 11 through 14, the actuator 137 of the momentum generating device 115 is driven to be expanded and contracted, whereby the plummet 139 makes the reciprocating movement. In such a state, for example, if the movable part 109 should be moved in the upward direction along Y axis of Fig. 11 (a), when the actuator 137 is expanded and the plummet 139 moves downwardly in Fig. 11 (a), the stopping device 141 is turned OFF and the stopping effect is also turned OFF, and on the other hand, when the actuator 137 is contracted and the plummet 139 moves upwardly in Fig. 11 (a), the stopping device is 141 turned ON, and the stopping effect is also turned ON. Through this movement, the movable part 109 will make the movement only in the upward direction along Y axis of Fig. 11 (a).

If the movable part 109 should be moved in the downward direction along Y axis of Fig. 11 (a), when the actuator 137 is expanded and the plummet 139 moves downwardly in Fig. 11 (a), the stopping device 141 is turned ON and the stopping effect is also turned ON, and on the other hand, when the actuator 137 is contracted and the plummet 139 moves upwardly in Fig. 11 (a), the stopping device 141 is turned OFF, and the stopping effect is also turned OFF. Through this movement, the movable part 109 will make the movement only in the downward direction along Y axis of Fig. 11 (a).

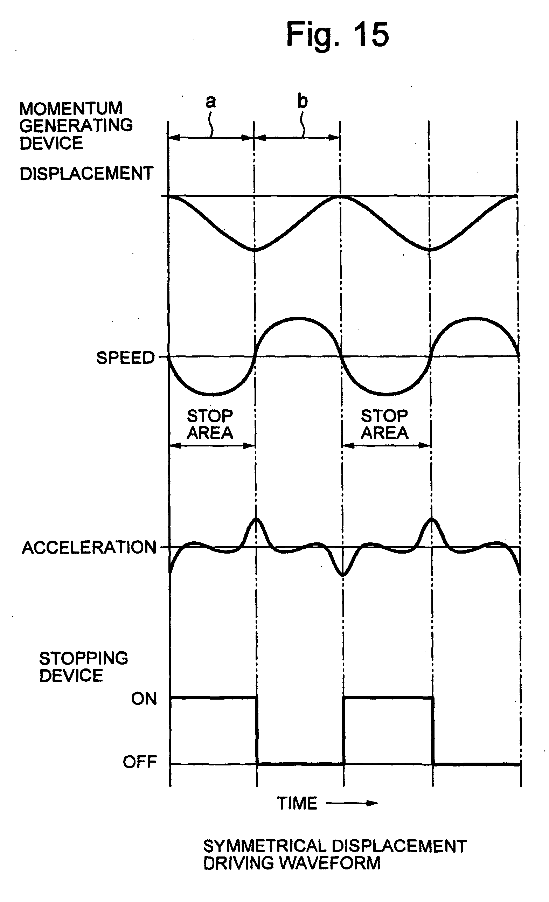

The above movements will be explained more in detail with reference to the chart of Fig. 15. According to Fig. 15, the lateral axis shows the time, the longitudinal axis shows the displacement, speed and acceleration characteristics of the plummet 139 in regard to the momentum generating device 115, and the longitudinal axis also shows the ON / OFF timing of the stopping device 141.

The explanation will be made on an assumption that the movable part 109 should be moved in one direction along Y axis. With reference to the first area "a" of Fig. 15, the plummet 139 moves in one direction, of which speed and acceleration are as per illustrated. At that time, the stopping device 141 is turned ON. Therefore, under ordinary circumstances, the movable part 109 should have moved to another direction, i.e.

the direction reverse to the moving direction of the plummet 139. However, as discussed above, because the stopping device 141 is turned ON, the movable part 109 is stopped.

With reference to the area "b" of Fig. 15, the plummet 139 moves in another direction, of which speed and acceleration are as per illustrated. At that time, the stopping device 141 is turned OFF. Therefore, the movable part 109 moves to one direction, i.e. the moving direction reverse to the other direction of the plummet 139. Thereafter, by repeating the motions of areas "a" and "b", the movable part 109 moves in one direction.

When the movable part should be moved in the other direction along Y axis, it is possible by reversing the ON / OFF timing of the stopping device 141.

According to the eleventh embodiment, as illustrated in Fig. 15, the displacement driving waveform between the timings of stopping and driving is symmetric, which is called as "symmetrical displacement driving waveform".

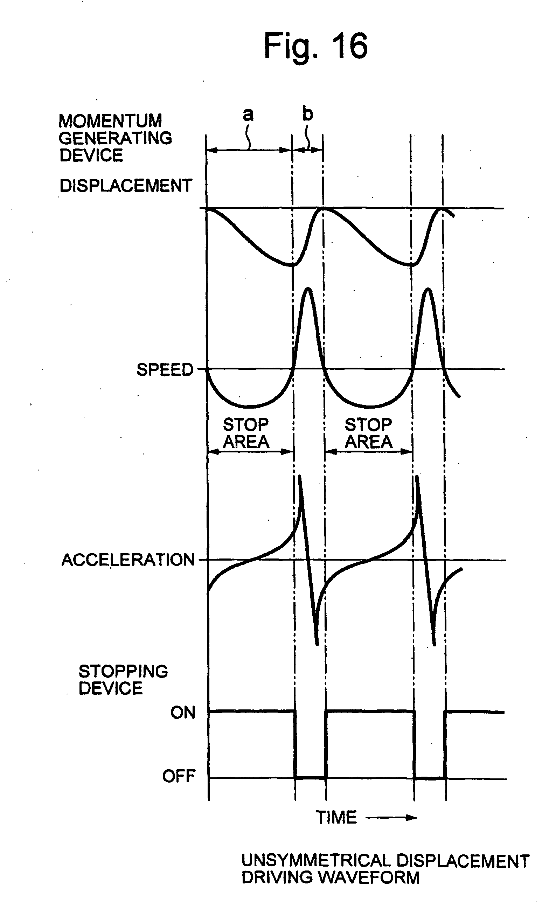

On the other hand, there is another type of displacement driving waveform, in which the displacement driving waveform is unsymmetrical between the timing of stopping and driving, i.e. "unsymmetrical displacement driving waveform". This is illustrated in Fig. 16. As shown by Fig. 16, the displacement of the stop area (area "a"), in which the stopping device 141 is turned ON, shows a moderate change (contract), and when the driving is performed by turning OFF the stopping device 141 (area "b"), a steep displacement (expansion) is given, and consequently, the speed and acceleration also show the steep change.

This kind of "unsymmetrical displacement driving waveform" will be frequently used for impact driving method, which may obtain the driving force by the magnitude of acceleration. However, this would give an impact shock against the movable part because of a large acceleration generated by steep change of displacement. In regard to momentum driving method, the steep displacement would give an impact shock, which would also cause remaining vibration, and this waveform is not suitable for precision positioning. In this regard, the "symmetrical displacement driving waveform" according to the present embodiment as discussed above, will not generate such an impact shock, thus is suitable for precision positioning. Among others, in particular, the present embodiment adopts a driving power supply substantially in sinusoidal waveform, it is possible to provide smooth acceleration and smaller impact shock.

The resolution in regard to the positioning preciseness of the movable part 109 will be explained. Where the displacement of the movable part is shown by (Y), and where the displacement of the momentum generating device 115 is shown by (y), the following formula (III) may be expressed:

$$Y = \int V dt \qquad (III)$$

When the above formula (II) is substituted, the following formula (IV) may be expressed:

$$Y = -(m/M) \int vdt$$
$$= -(m/M)\, y \,\dots\, (IV)$$

Therefore, the displacement (Y) of the movable part 109 is (m/M) times of the displacement (y) of the momentum generating device 115. This means that the resolution is shown as multiplication by (M/m) of the momentum generating device 115.

For example, provided that (m/M = 1/100), when the driving resolution of the momentum generating device 115 is 10 nm (nanometer, $10^{-9}$ m), the resolution of the movable part 109 is 0.1 nm. Therefore, it is possible to accomplish the positioning with higher preciseness, having the centuple resolution.

For the purpose of obtaining such a higher resolution, it is desirable to satisfy the condition as shown by the following formula (V):

$$m/M < 1 \qquad (V)$$

This also means the formula (VI) as below, and eventually, where the weight m of the momentum generating device 115 is set to be not more than half of the overall weight (m + M) of the movable part 109, it is possible to obtain higher resolution:

$$m/(m + M) < 1/2 \qquad (VI)$$

The above embodiment has the following merits.

First, in regard to the movable part 109, because the thickness of the left guide 123 and the right guide 125, and the thickness of the vibration plate 117, are different from each other, for example, if the area of the sloped floating surfaces should be increased, it is simply possible by increasing the thickness of the left guide 123 and the right guide 125. Further, if the vibration amplitude of the vibrator 113 should be increased, it is simply possible by decreasing the thickness of the vibration plate 117. Therefore, the vibration plate 117 and the left and right guides 123, 125 will not interfere with each other, whereby it is possible to improve the floating stability and the floating rigidity easily.

For reference, according to the present embodiment, the thickness of the left guide 123 and the right guide 125 is not changed, and only the thickness of the vibration plate 117 is decreased, in order to increase the vibration amplitude. According to this structure, it is possible to increase the floating force, whereby the floating stability and the floating rigidity may be improved.

Further, because the pair of pillar members 131, 133 is positioned along the center axis of the vibrator 113, the performance of the pillar members may be functioned without interfering with the vibration characteristic of the vibrator 113.

In addition, because the pair of pillar members 131, 133 is connected to the vibration plate 117 through the narrow projecting parts 151, 153 and the constricted parts 155,157, the above effect may also be facilitated.

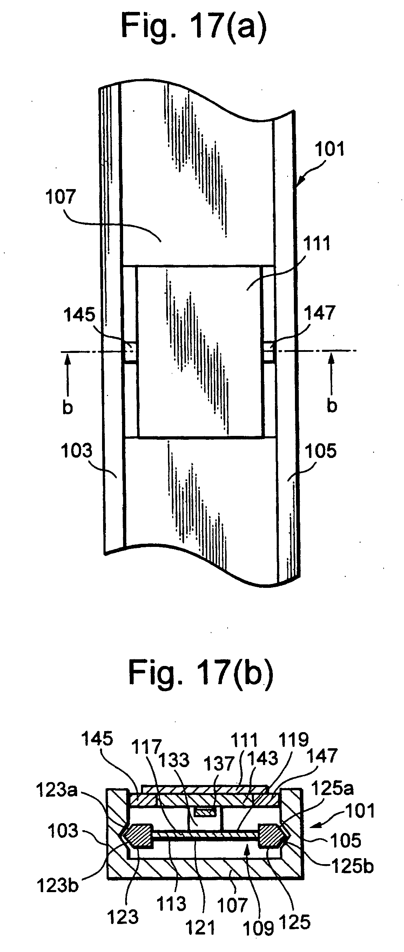

Now a twelfth embodiment of the present invention will be explained with reference to Fig. 17. According to the twelfth embodiment, in regard to the fixed part 101 and the movable part 109, the relation of the recessed and protruded shapes of the guides has been reversed, and the other structure is substantially the same as that of the eleventh embodiment as discussed above.

Therefore, the identical numerals are allotted to the identical elements, and the explanation thereof will not be made.

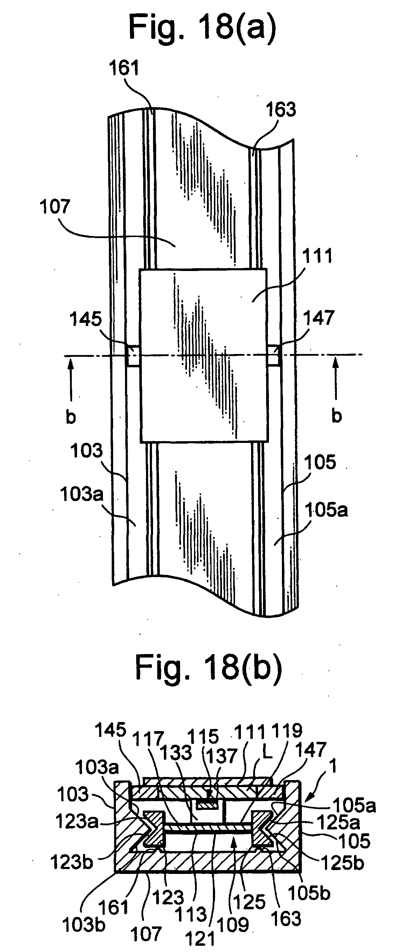

Now a thirteenth embodiment of the present invention will be explained with reference to Fig. 18. According to the thirteenth embodiment, under the structure of the eleventh embodiment, there are sticking preventing projections 161, 163 inside the bottom plate part 107 of the fixed part 101, at positions corresponding the left guide 103 and the right guide 105. When the ultrasonic levitation device is not actuated, the movable part 109 has been dropped downwardly. Therefore, without the sticking preventing projections 161, 163, the floating surfaces 123a and 125a of the left guide 123 and the right guide 125 should have been placed on the guides 103a and 105a of the fixed part 101. Because the both surfaces have been finished at higher preciseness, it would allow the invasion of moisture, etc., into the space between them easily, and in such a case, the both surfaces would be stuck, which would cause the abnormal floating after occurrence of such sticking.

Therefore, when the sticking preventing projections 161, 163 are provided, the both surfaces will not become in contact with each other, or will only become in slight contact with each other, whereby the sticking of each surface may be prevented.

There may be various positions for providing the sticking preventing projections, and are not limited to the fixed part 101. For example, the positions may be on the movable part 109. Further, various numbers, positions, sizes, etc. may be determined.

The projections are not limited to be provided by an integral material with the fixed part 101 or the movable part 109. For example, a projecting shape may be formed by resin coating, etc.

With reference to the pillar members 131, 133 according to the eleventh through thirteenth embodiments, when any viscous-elastic material, such as rubber, is provided between the pillar members 131, 133 and the vibrator 133, and consequently, when the binding of the vibration plate is further loosened, it is possible to further reduce the interference with the vibrator 113.

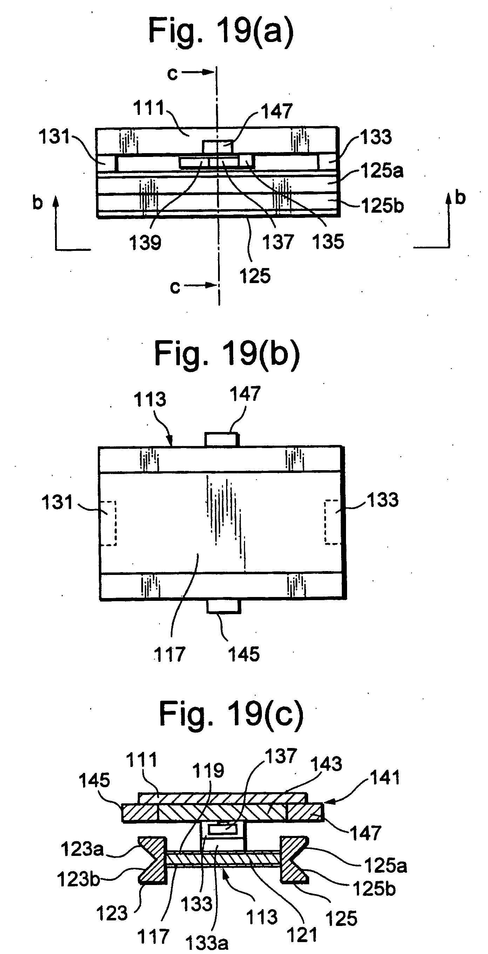

Now a fourteenth embodiment of the present invention will be explained with reference to Fig. 19. According to the fourteenth embodiment, under the structure of the eleventh embodiment, the pillar members 131, 133 are placed on the vibrator 113, and the pillar members 131, 133 partially comprise rubbers 131a, 133a serving as the viscous-elastic material. The pillar members 131, 133 and the vibrator 113 are connected to each other by adhesive.

The other structure is substantially the same as that of the eleventh embodiment as discussed above, and the identical numerals are allotted to the identical elements, and the explanation thereof will not be made.

According to the fourteenth embodiment, although the pillar members 131, 133 partially comprise rubber material serving as the viscous-elastic material, it is also possible to form them wholly by rubber material, as long as the pillar members wholly or partially comprise the viscous-elastic material.

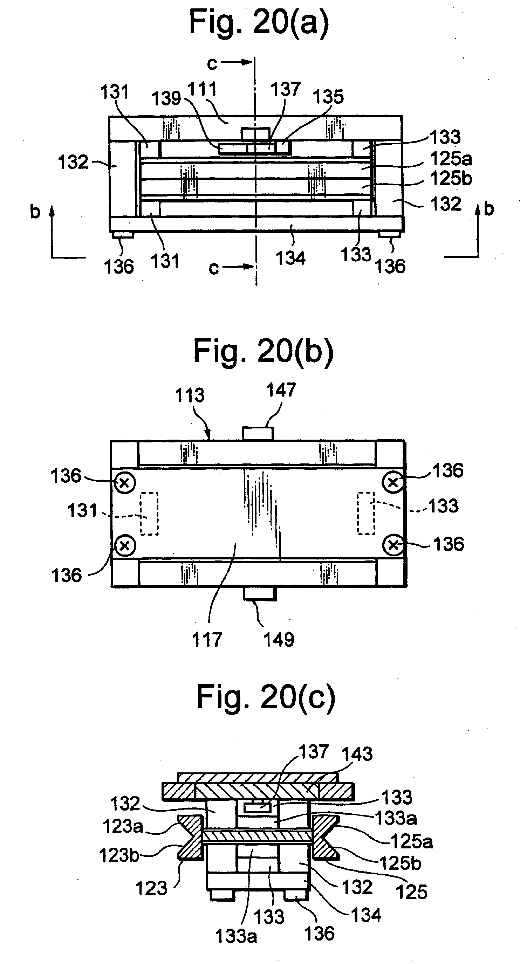

Now a fifteenth embodiment of the present invention will be explained with reference to Fig. 20. According to the fifteenth embodiment, under the structure of the eleventh embodiment, likewise the case of the fourteenth embodiment as discussed above, first, the pillar members 131, 133 are placed on the vibrator 113, and the pillar members 131, 133 partially comprise rubbers 131a, 133a serving as the viscous-elastic material. Further, the pillar members 131, 133 are positioned both on the upper and lower sides of the vibrator 113, and are connected by screws. There are spacers 132 at the four corners, and a base plate 134 is provided, sandwiched by screws 136 respectively inserted in the four spacers 132. The screws 136 are screwed into the movable part body 111 in which threads have been formed. With this structure, it is possible to improve the rigidity of the movable part body 111.

According to the first through fifteenth embodiments, the explanations are made in regard to the examples in which the recessed and protruded parts of the movable part and the fixed part are provided in the horizontal direction, but it is also possible to provide an embodiment, in which the recessed and protruded parts are provided in the perpendicular directions. For example, the upper surface of the fixed part may be in a protruded shape, and the movable part may be in a recessed shape, so that the movable part may be positioned confronting the upper surface of the fixed part. Further, the reversed structure may also be provided.

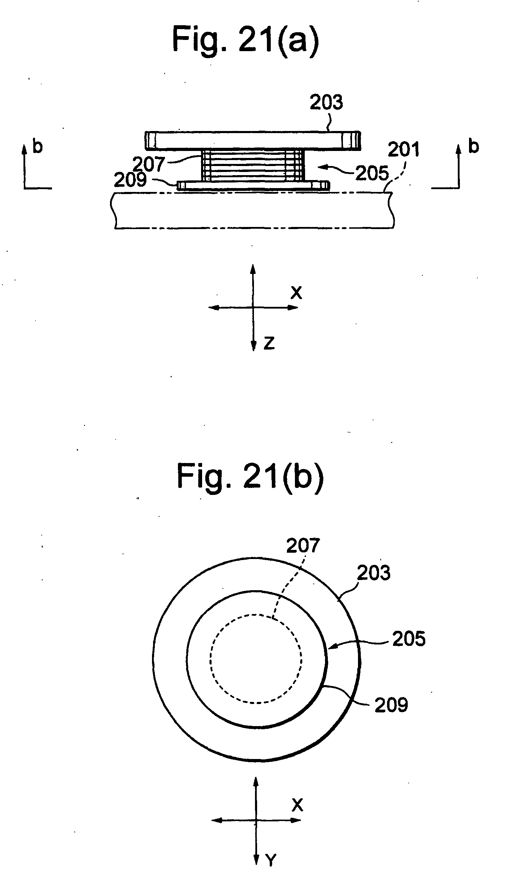

Now a sixteenth embodiment of the present invention will be explained with reference to Fig. 21. Fig. 21 (a) is a front view of an ultrasonic levitation device according to the present embodiment, and Fig. 21 (b) is a view as seen by the arrows b - b of Fig. 21 (a). There is a fixed part 201, and a movable part 203 is floated and positioned to be movable above the fixed part 201. The movable part 203 is provided with an ultrasonic vibrator 205. The ultrasonic vibrator 205 has a plurality of stacking piezoelectric elements 207, and an oscillating plate 209 is attached to the bottom thereof.

When the ultrasonic vibrator 205 generates ultrasonic oscillation, the movable part 203 moves above the fixed part 201 in a floated state.

The sixteenth embodiment as discussed above has the following merits.

First, because the ultrasonic vibrator 205 by stacking the piezoelectric elements 207 is adopted, it is possible to generate the ultrasonic oscillation at larger vibration amplitude. According to the prior art, since it is practically impossible to increase the driving voltage applied between electrodes, the larger vibration amplitude cannot be obtained. On the other hand, according to the ultrasonic vibrator 205 provided by stacking the piezoelectric elements 207 in the present embodiment, for the purpose of obtaining the same vibration amplitude, it is sufficient to require the driving voltage in proportion to the thickness, and eventually, the larger vibration amplitude may be obtained at a practically applicable driving voltage.

Second, because the ultrasonic oscillation at larger vibration amplitude can be generated, the floating height of the movable part 203 against the fixed part 201 becomes larger, whereby the allowance of preciseness of plane surface in regard to the floating surface of the fixed part 201 may become wider, and more stable floating may be accomplished.

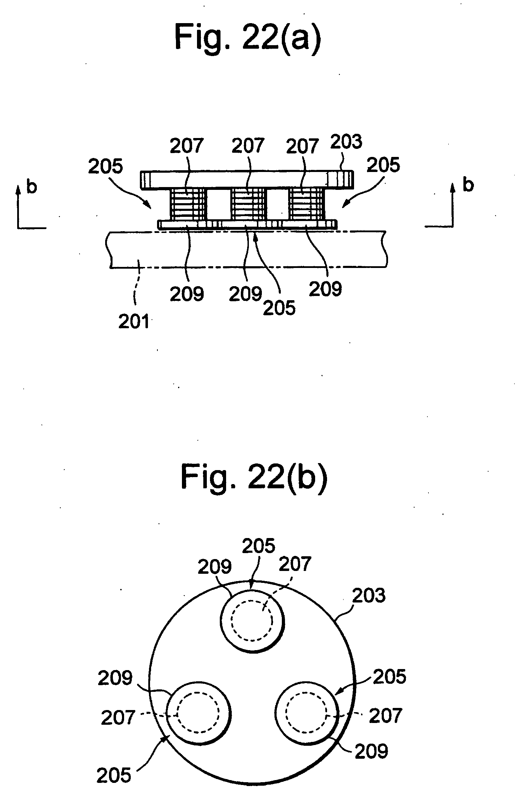

Now a seventeenth embodiment of the present invention will be explained with reference to Fig. 22. According to the seventeenth embodiment, there are three ultrasonic vibrators 205 of the sixteenth embodiment, at equable three positions on the same circular line.

For reference, the identical numerals are allotted to the identical elements, and the explanation thereof will not be made.

According to this embodiment, substantially the same effect as that of the sixteenth embodiment can be accomplished, and in addition, it is possible to improve the stability of floating by proving the ultrasonic vibrators 205 at equable three positions on the same circular line. That is to say, when the ultrasonic oscillations, generated by the ultrasonic vibrators 205 at three positions, are controlled by maintaining the balance appropriately, for example, even when the floating surface of the fixed part 201 is tilted, the movable part 203 may cope with the tilted surface and maintain the stable position.

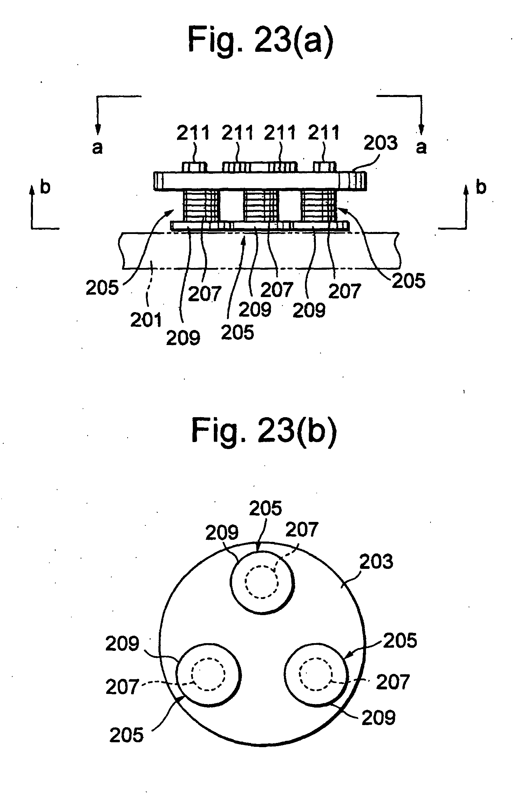

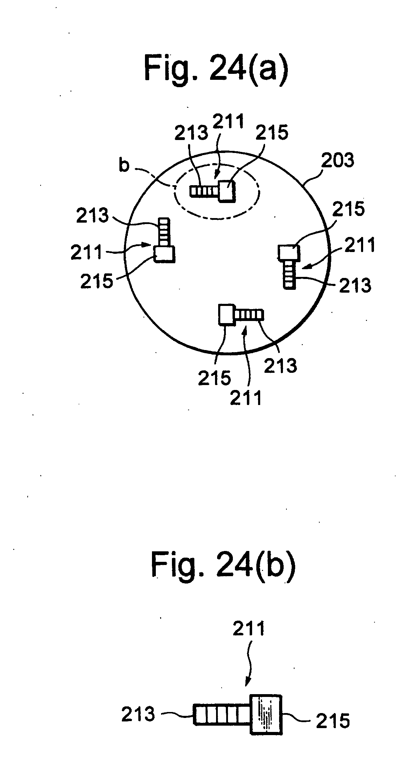

Now an eighteenth embodiment of the present invention will be explained with reference to Figs. 23 and 24. According to the eighteenth embodiment, there are four ultrasonic impact generating devices 211, provided at equable positions on the same circular line, on the movable part 203 of the seventeenth embodiment as discussed above. As illustrated in Fig. 24, each of the ultrasonic impact generating devices 211 comprises a piezoelectric actuator 213, and a plummet 215 attached to one side of the piezoelectric actuator 213. These four ultrasonic impact generating devices 211 serve for driving and positioning of the movable part 203.

According to the eighteenth embodiment, substantially the same effect as that of the seventeenth embodiment can be accomplished, and in addition, the movable part 203 may be moved in an arbitrary direction within X - Y two-dimensional surface, or even in a rotating direction.

In particular, when the two ultrasonic impact generating devices 211, positioned along X axis direction, are contracted rapidly, and when the other two ultrasonic impact generating devices 211, positioned along Y axis direction, are expanded rapidly, the impact can be generated. Further, when this impact generation is repeated, the rotation can be made.

Further, when the two ultrasonic impact generating devices 211, positioned along X axis direction, respectively make different motions rapidly to be contracted and expanded, it is possible to make movement in X axis direction. Similarly, the movement in Y axis direction can be made. When the balance between the movement in X axis direction and that in Y axis direction are controlled, it is also possible to make movement in an arbitrary direction.

When the positioning at a desired position should be done, the positioning and stopping can be made by reducing the width of vibration. This type of ultrasonic levitation device has contact-free floating structure, thus the friction between the fixed part 201 and the movable part 203 is very small, which would cause a problem of difficulty in stable stopping of the movable part 203 at a desired position. Thus, when the impact is generated and the repeated vibration is applied by the ultrasonic impact generating devices 211, the damping energy may increase, and the unstable disturbance may become relatively smaller by applying kinetic energy, whereby the stable stop positioning may be accomplished.

According to the sixteenth through eighteenth embodiments, the ultrasonic vibrators are attached to the movable part. However, it is also possible to attach the vibrators to the fixed part.

The number of the ultrasonic vibrators is not limited to three, and it is possible to provide two, four, or more vibrators.

Similarly, the number of the ultrasonic impact generating devices is not limited, and it is possible to one device, or two, three, five or more devices.

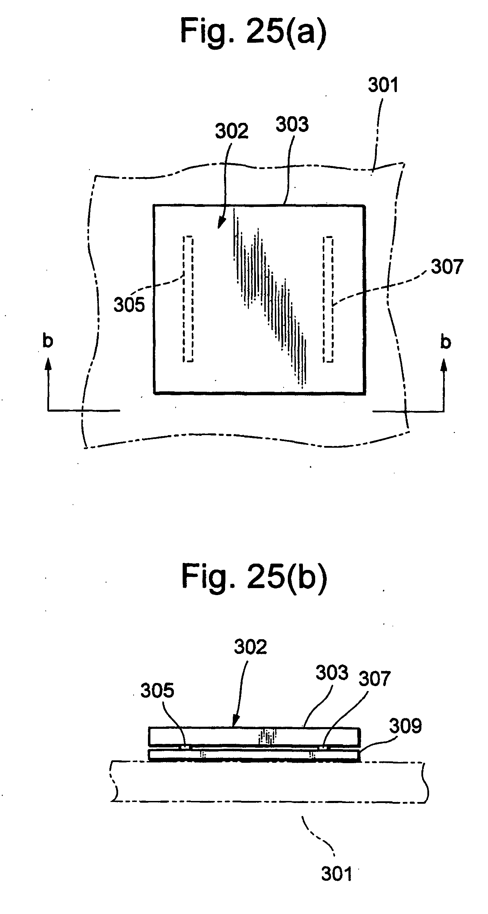

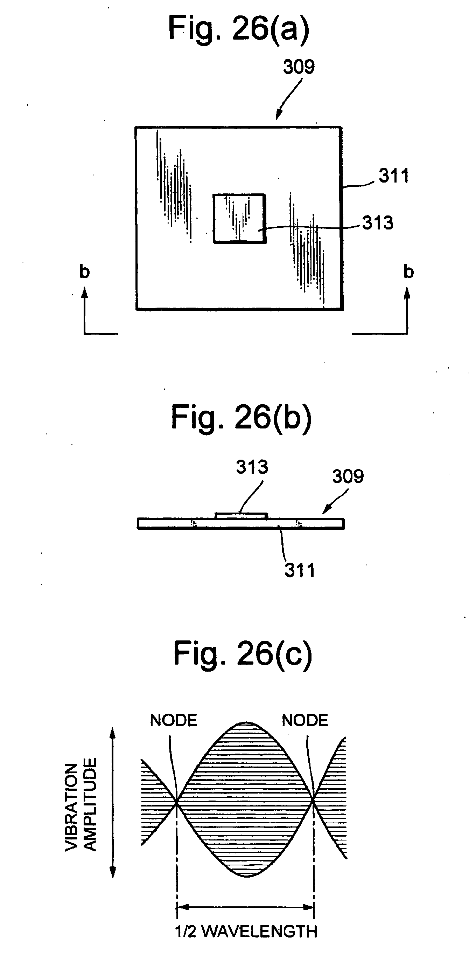

Now a nineteenth embodiment of the present invention will be explained with reference to Figs. 25 and 26. There is a fixed part 301, and a movable part 302 is floated and positioned to be movable above the fixed part 301. The movable part 302 is provided with a movable element 303, and a plate oscillating device 309 is attached to the lower surface of the movable element 303 through a pair of pillar members 305, 307.

The plate oscillating device 309 has a structure as shown by Fig. 26. As illustrated in Fig. 26 (a) and (b), there is a vibration plate 311 made of aluminum or stainless steel, and a bimorph type of piezoelectric element 313 is connected to the center of the vibration plate 311. With this structure, when an alternating voltage is applied to electrodes of the piezoelectric element 313, the plate oscillating device 313 generates ultrasonic vibration. The ultrasonic vibration has a pattern as illustrated in Fig. 26 (c).

The piezoelectric element may be unimorph type of piezoelectric element, etc. Further, the piezoelectric element is not limited to be connected to the center, and it is also possible to connect a plurality of distributed piezoelectric elements. In addition, the material of the vibration plate 311 is not limited, as long as satisfying the required strength, durability and vibration resistance.

When the plate oscillating device 309 having the above structure generates ultrasonic oscillation, the movable part 302 is floated above the fixed part 301, and may move by any driving means provided separately.

The nineteenth embodiment as discussed above has the following merits.

First, the present embodiment uses the plate oscillating device 309, and as compared with the conventional "Langevin" type of ultrasonic vibration element, the height is very low, thus the height of the movable part 302 may also become very low, whereby the down-sizing of the device can be accomplished.

Second, because the height of the movable part 302 becomes low, the overall gravity center of the movable part 302 may also become low, whereby the stability during moving may be improved considerably.

Third, the connection between the movable element 303 and the plate oscillating device 309 is done through the pair of pillar members 305, 307, thus the ultrasonic vibration of the plate oscillating device 309 will not be interfered, and the integration may be done by prohibiting the vibration of the movable element 303.

Fourth, because the pair of pillar members 305, 307 is positioned corresponding to the nodes with reference to the ultrasonic vibration pattern as illustrated in Fig. 26 (c), the above effect may be facilitated.

Fifth, the space between the pair of pillar members 305, 307 is set to be an integral multiple number (in the present embodiment, single) of half of the sympathetic vibration wavelength, whereby the above effect may be facilitated, and the stable vibration may be obtained.

Sixth, according to the present embodiment, the pillar members 305, 307 are positioned at inner positions from the outer edges of the plate oscillating device 309, by allowing the vibration of the plate oscillating device 309 at these outer edge positions. Accordingly, the posture maintaining effect of the movable part 302 may be accomplished significantly. In other words, when the outer edge is about to be tilted, there will be stronger floating force against the tilting force, generated by large vibration amplitude of the outer edge.

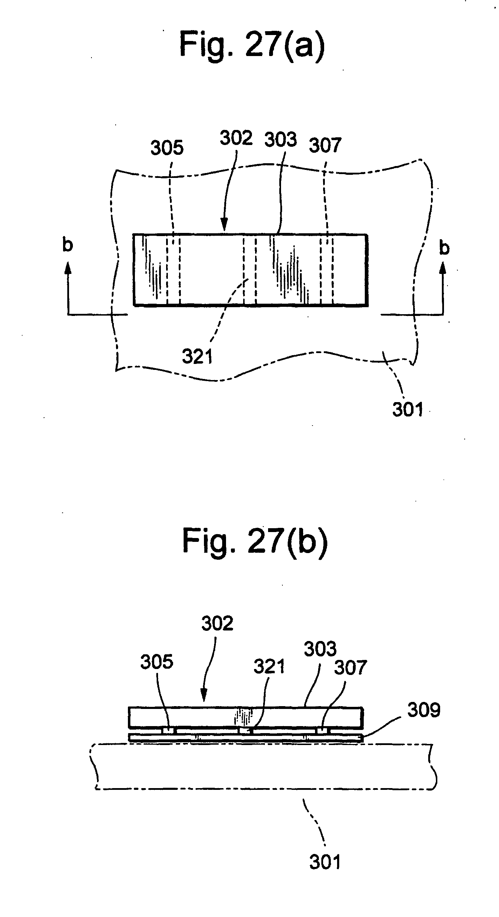

Now a twentieth embodiment of the present invention will be explained with reference to Fig. 27. According to the twentieth embodiment, under the structure of the nineteenth embodiment, another pillar member 321 is added to the space between the pillar members 305, 307. In this case, the each space between the pillar members 305, 321 and 307 is single-fold of half of the sympathetic vibration wavelength. Therefore, substantially the same effect as that of the nineteenth embodiment may be accomplished, such as to able to obtain larger vibration amplitude by sympathetic vibration, among the pillar members 305, 321 and 307.

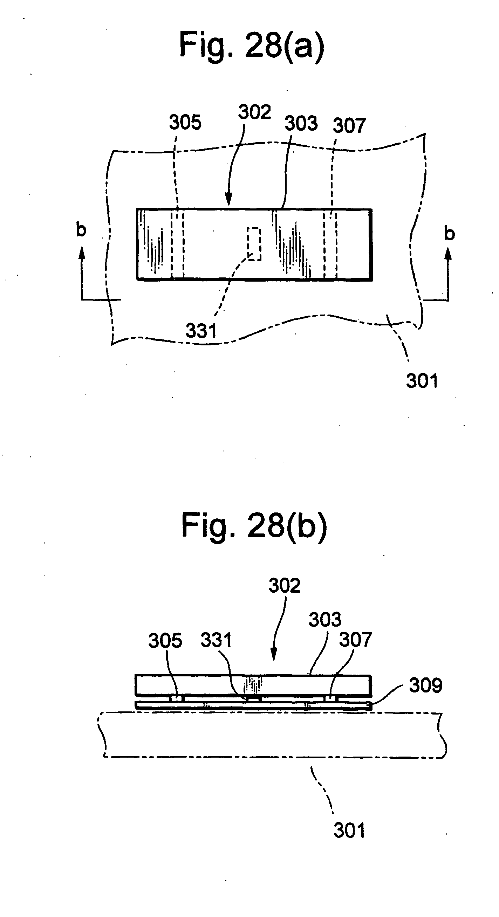

Now a twenty-first embodiment of the present invention will be explained with reference to Fig. 28. According to the twenty-first embodiment, instead of the pillar member 321 of the twentieth embodiment, there is a rib 331 on the plate oscillating device 309. For the purpose of obtaining a stable sympathetic vibration at larger vibration amplitude, it is also possible to provide the rib instead of the pillar member.

Although the same applies to the case of the twentieth embodiment, the pillar members 305, 307 are positioned coincident with quarter of the sympathetic vibration wavelength from the end of the plate oscillating device 309.

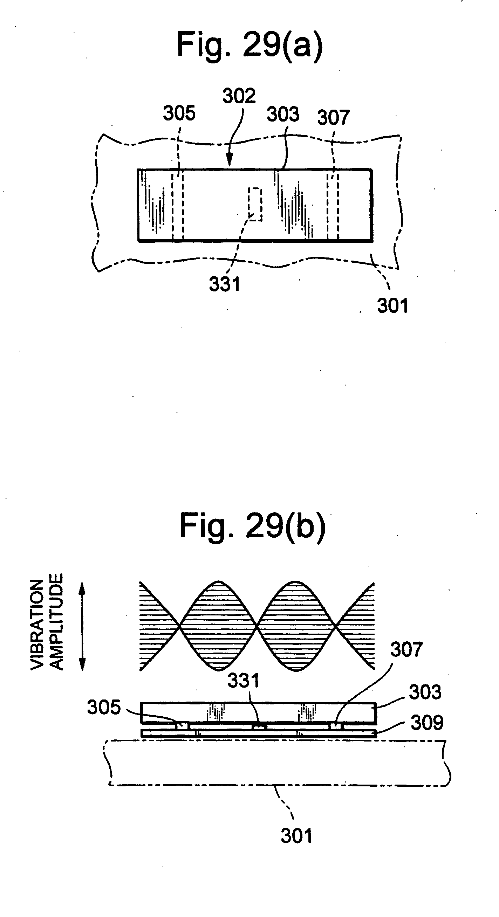

The numeral "quarter" of the sympathetic vibration wavelength is merely an example, and it is also possible, for example, to set to be any multiple number of {1/4 + (1/2) × n} of the vibration wavelength, on condition that symbol "n" is an integral number, that is, any number in which an integral multiple number of half of vibration wavelength is added to quarter of vibration wavelength. Further, even when there is a slight deviation from the quarter of the vibration wavelength, substantially the same effect can be accomplished. Consequently, as illustrated in Fig. 29, it is possible to provide a vibration pattern in which larger vibration amplitude may be obtained at the both ends, whereby further stable floating can be provided. This is because, even when any of the ends is about to be tilted, there is a floating force generated by vibration, against such a tilting force, it is possible to prohibit the tilted state.

This effect may be accomplished, as discussed in the nineteenth embodiment, when the pillar members 305, 307 are provided at inner positions from the outer edges of the plate oscillating device 309. In particular, when the positioning is made to be identical with approximately quarter of the sympathetic vibration wavelength, the effect may be facilitated.

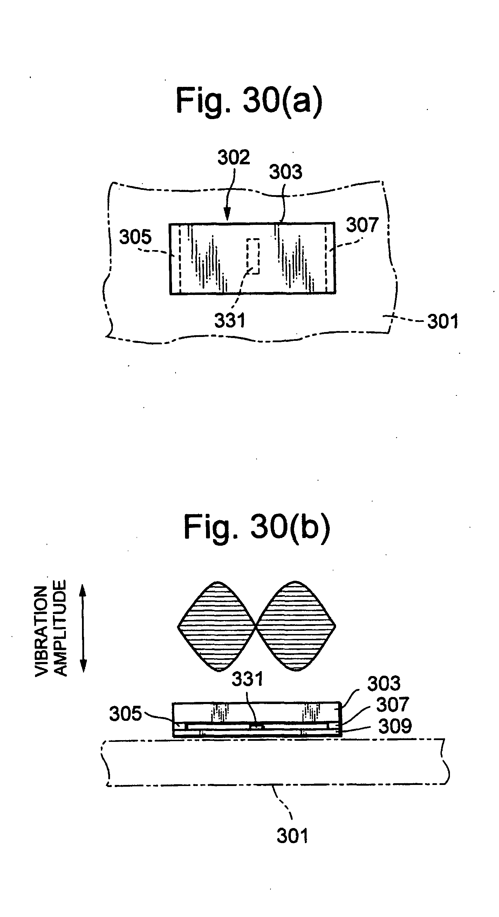

For reference, as illustrated in Fig. 30, when the pillar members 305, 307 are respectively positioned at the ends, the vibration amplitude at the ends will become smaller, and consequently, it would be impossible to oppose to the tilting force at each end effectively.

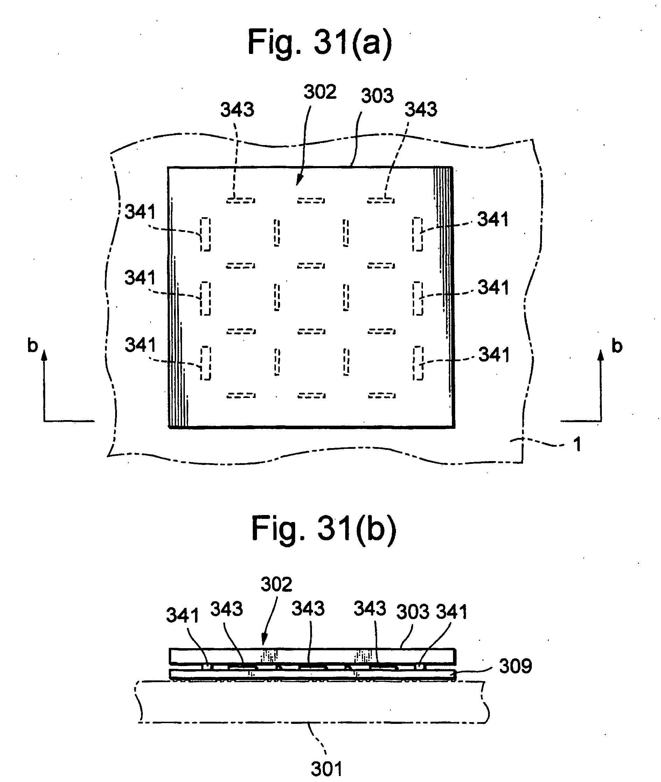

Now a twenty-second embodiment of the present invention will be explained with reference to Fig. 31. According to the twenty-second embodiment, there are three pillar members 341 respectively provided on the left and right of the movable element 303, and a plurality of ribs 343 is provided in the longitudinal and horizontal directions among these pillar members. With this structure, substantially the same effects as those of the nineteenth through twenty-first embodiments may also be accomplished.

The vibration pattern of Fig. 29 shows the vibration only in one (horizontal) direction, and according to the structure of Fig. 31, the similar vibration may be generated also in the perpendicular (longitudinal) direction. Thus, the pillar members 341 and the ribs 343 are positioned in order to obtain larger vibration in any of the two directions, i.e. in the longitudinal and horizontal directions.

According to the nineteenth through twenty-second embodiments, the examples are illustrated by using the bimorph type of piezoelectric elements, but it is also possible to use, for example, unimorph type of piezoelectric elements.

The number of pillar members, the existence of ribs, and the number and positions of the ribs when the ribs are used, are not limited.

According to the nineteenth through twenty-second embodiments, ultrasonic vibration is generated at the movable part, but it is also possible to generate ultrasonic vibration at the fixed part. In this case, plate oscillating devices will be attached to the fixed part through pillar members.

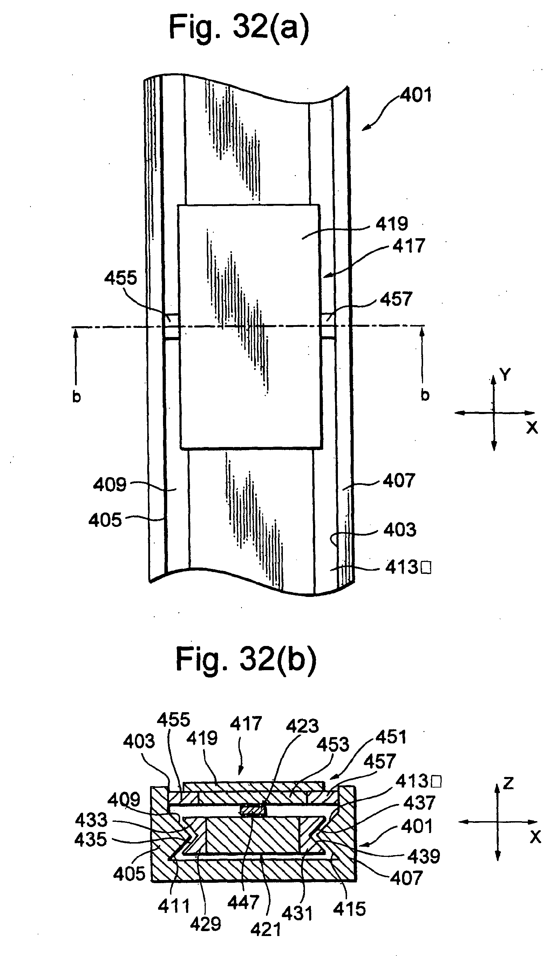

Now a twenty-third embodiment of the present invention will be explained with reference to Figs. 32 through 34. Fig. 32 (a) is a plan view of an ultrasonic levitation device according to the present embodiment, and Fig. 32 (b) is a sectional view cut along the line b - b of Fig. 32 (a).

There is a fixed part 401, having a U-shaped groove 403 substantially in a shape of letter U. The left and right sides of the U-shaped groove 403 respectively have a left guide 405 and a right guide 407, sharply protruding from these sides. The left guide 405 comprises an upper sloped surface 409 and a lower sloped surface 411, and a part between the upper sloped surface 409 and the lower sloped surface 411 is formed to be protruded inwardly. Similarly, the right guide 407 comprises an upper sloped surface 413 and a lower sloped surface 415, and a part between the upper sloped surface 413 and the lower sloped surface 415 is formed to be protruded inwardly.

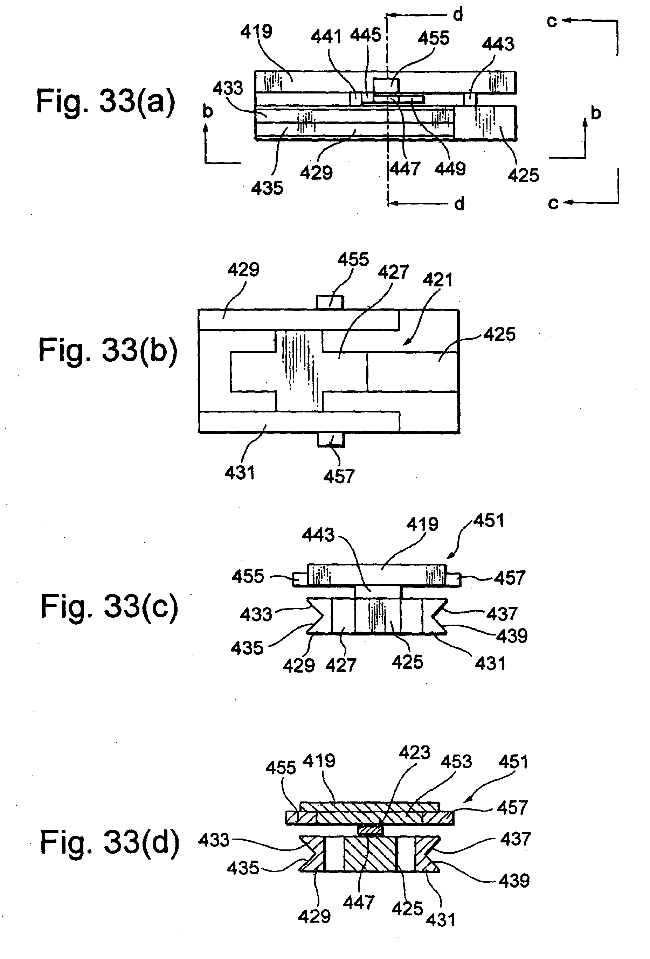

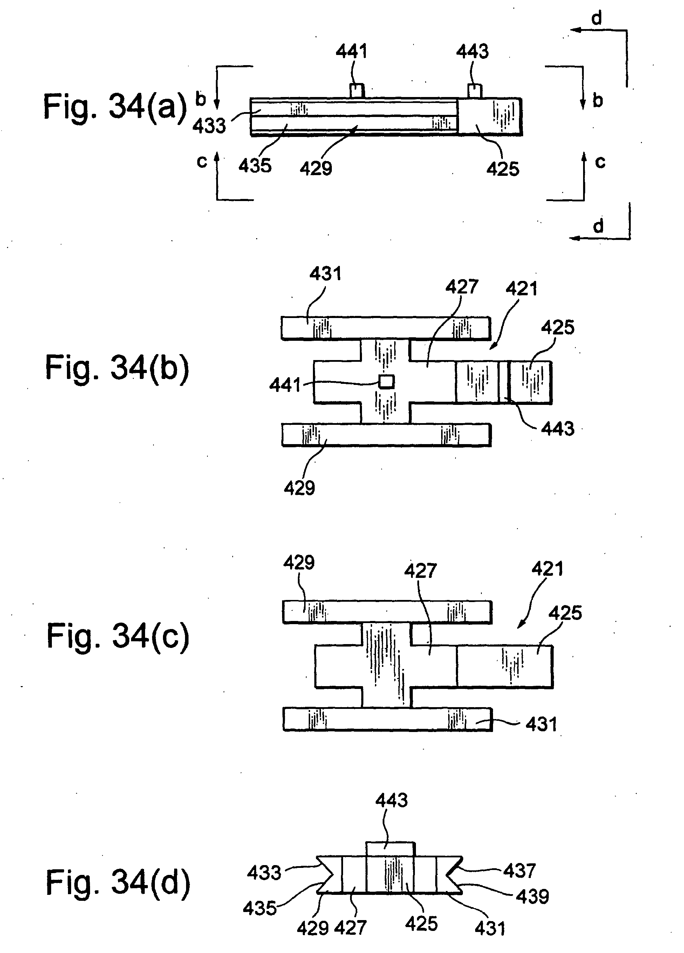

There is a movable part 417 inside the U-shaped groove 403. The movable part 417 may be floated in Z axis direction of Fig. 32 (b), and placed to be movable in Y axis direction of Fig. 32 (a). The movable part 417 chiefly comprises, a movable part body 419, a vibrator 421, a momentum generating device 423 and a stopping device 451. As illustrated in Figs. 33 and 34, the vibrator 421 comprises, a Langevin type ultrasonic transducer 425 serving as a vibration source, a cross-shaped vibrating direction changing member 427 serving as a vibrating direction changing means, a left guide 429, and a right guide 431. The left guide 429 and the right guide 431 are respectively formed in recessed shapes, corresponding to the left guide 405 and the right guide 407 of the fixed part 401. Accordingly, the left side of the vibrator 421 is provided with an upper sloped surface 433 and a lower sloped surface 435. Similarly, the right side of the vibrator 421 is provided with an upper sloped surface 437 and a lower sloped surface 439.

When the vibrator 421 having the above structure generates ultrasonic vibration, as illustrated in Fig. 32 (b), the movable part 417 is floated in Z axis direction.

According to the present embodiment, the Langevin type ultrasonic transducer 425 serving as the vibration source is positioned to be oriented in the horizontal direction, in order to lower the height of the movable part 417. Further, the vibrating direction of the Langevin type ultrasonic transducer 425 (in the present case, in Y axis direction) is changed by the cross-shaped vibrating direction changing member 427, into two orthogonal directions (in the present case, in X axis direction). Consequently, the vibrator 421 of the movable part 417 vibrates in the direction of the width, whereby the floating force is given from the fixed part 401, together with the binding force in the direction of the width. Consequently, as discussed above, the movable part 417 is floated in Z axis direction.

The cross-shaped vibrating direction changing member 427 may choose a desirable sympathetic vibration mode among various sympathetic vibration modes, by suitably selecting the input frequency, shape and size.

In regard to the Langevin type ultrasonic transducer 425, in general, the cross section surface of this type of transducer has a round shape. However, according to the present embodiment, the cross section surface is in a rectangular shape, whereby a prism shape of Langevin type ultrasonic transducer 425 is provided. This is because, in the case of round shape, when placed to be oriented in the horizontal direction, the height may become partially taller, but if the prism shape of transducer is provided, the shape may become flat. Accordingly, it is possible to facilitate the low-profile shaping of the transducer.

As discussed above, the movable part 417 is provided with the momentum generating device 423. There is the movable part body 419 above the vibrator 421 through pillar members 441, 443, and the momentum generating device 423 is provided on the lower surface of the movable part body 419. The momentum generating device 423 comprises, a fixing member 445 fixed on the lower surface of the movable part body 419, an actuator 447 attached to the fixing member 445, and a plummet 449 attached to an end of the actuator 447. The actuator 447 and the plummet 449 are placed with having a space, in order not to become in contact with any other structural member by expansion and contraction of the actuator 447.

The actuator 447 is a piezoelectric sheet lamination type actuator, formed by stacking piezoelectric elements. In regard to this type of piezoelectric sheet lamination type actuator, it is desirable to reduce the number of staking, as long as having high resolution.

According to the present embodiment, the actuator 447 using piezoelectric elements has been described as an example. However, the actuator is not limited to that using piezoelectric elements, and it is possible to use any other actuator, as long as the actuator makes the expansion and contraction. For example, it is possible to use any type of actuator, such as that using electromagnetic solenoid, air cylinder, etc.

Basically, the material of the plummet 449 is not limited, and it is possible to use, for example, iron, aluminum, copper, etc. The plummet 449 may also be made of any non-metal material.

There is the stopping device 451 attached to the movable part 417. The stopping device 451 comprises, an actuator 453 attached to the movable part body 419, and stopper members 455, 457 respectively attached to the both sides of the actuator 453.

Likewise the case of the actuator 447 of the momentum generating device 423 as discussed above, the actuator 453 is a piezoelectric sheet lamination type actuator, formed by stacking piezoelectric elements. However, it is not necessary to provide any sheet lamination type actuator, and it is also possible to use a single sheet type actuator.

According to the present embodiment, the actuator 453 using piezoelectric elements has been described as an example. However, the actuator is not limited to that using piezoelectric elements, and it is possible to use any other actuator, as long as the actuator makes the expansion and contraction. For example, it is possible to use any type of actuator, such as that using electromagnetic solenoid, air cylinder, etc.

The stopper members 455, 457 comprise a viscous-elastic material, for example polyacetar resin. When this type of viscous-elastic material is used, the impact during occurrence of stopping function may be relieved, and the occurrence of noise or abrasion particles may also be prevented.

The driving mechanism by the momentum generating device 423 and the stopping device 451 is substantially the same as that of the eleventh embodiment as discussed above. Thus the detailed explanation will not be made.

The function of the present embodiment will now be explained, according to the above structure.

With reference to Figs. 32 and 33, the ultrasonic vibration is generated by driving the Langevin type ultrasonic transducer 425 of the vibrator 421. The direction of the generated ultrasonic vibration is then changed orthogonally, by the cross-shaped vibrating direction changing member 427, in order to vibrate in the direction of the width. Thus, the movable part 417 is floated in Z axis direction.

Accordingly, the actuator 447 of the momentum generating device 423 is driven to be expanded and contracted, whereby the plummet 449 makes the reciprocating movement. In such a state, for example, if the movable part 417 should be moved in the upward direction along Y axis of Fig. 32 (a), when the actuator 447 is expanded and the plummet 449 moves downwardly in Fig. 32 (a), the stopping device 451 is turned OFF and the stopping effect is also turned OFF, and on the other hand, when the actuator 447 is contracted and the plummet 449 moves upwardly in Fig. 32 (a), the stopping device 451 is turned ON, and the stopping effect is also turned ON. Through this movement, the movable part 417 will make the movement only in the upward direction along Y axis of Fig. 32 (a).

If the movable part 417 should be moved in the downward direction along Y axis of Fig. 32 (a), when the actuator 447 is expanded and the plummet 449 moves downwardly in Fig. 32 (a), the stopping device 451 is turned ON and the stopping effect is also turned ON, and on the other hand, when the actuator 447 is contracted and the plummet 449 moves upwardly in Fig. 32 (a), the stopping device 451 is turned OFF, and the stopping effect is also turned OFF. Through this movement, the movable part 417 will make the movement only in the downward direction along Y axis of Fig. 32 (a).

The present embodiment has the following merits.

First, because the direction of the ultrasonic vibration, generated by the Langevin type ultrasonic transducer 425, is changed orthogonally in different two directions by using the cross-shaped vibrating direction changing member 427, it is possible to place the Langevin type ultrasonic transducer 425, to be oriented not in the perpendicular direction, but in the horizontal direction, whereby the height of the movable part 417 may be lowered. Accordingly, the down-sizing of the device may be accomplished.

Second, because the height of the movable part 417 becomes low, the overall gravity center of the movable part 417 may also become low, whereby the stability during moving may be improved considerably.

Third, according to the present embodiment, because the Langevin type ultrasonic transducer 425 is in a prism shape, there is no partial projection likewise the case of a cylindrical shape, and the low-profile shaping of the movable part 417 may be facilitated.

Fourth, the connection between the movable element body 419 and the vibrator 421 is done through the pair of pillar members 441, 443, in a state that, the pillar member 441 is positioned at the center of the cross-shaped vibrating direction changing member 427, and that the other pillar member 443 is positioned at the center of the Langevin type ultrasonic transducer 425, and the vibration amplitude at these positions is substantially "0", thus there is very slight interference with the ultrasonic vibration of the vibrator 421. In addition, where the connection is done via a viscous-elastic material such as rubber, the vibration absorption may be further prohibited.

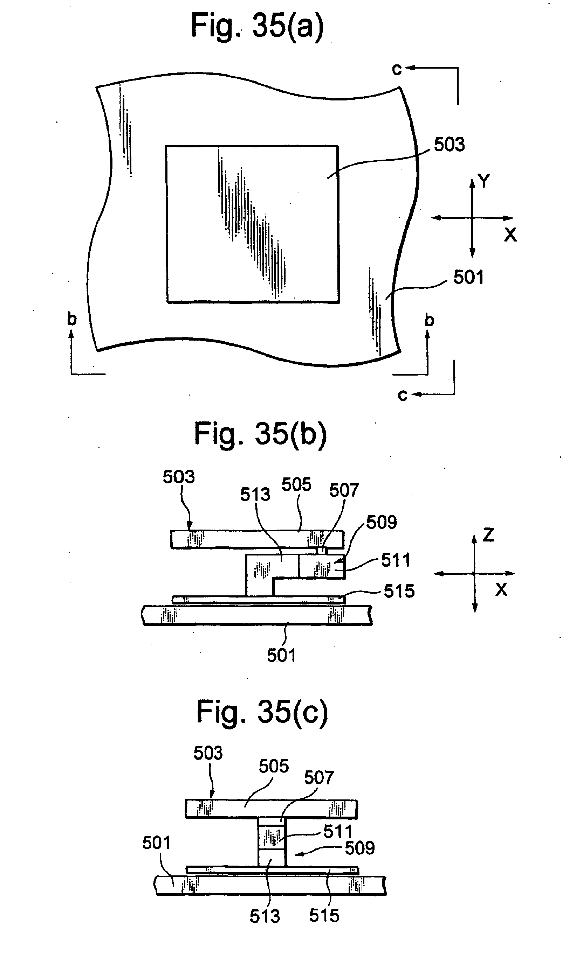

Now a twenty-fourth embodiment of the present invention will be explained with reference to Fig. 35. According to the twenty-third embodiment as discussed above, the ultrasonic vibration at the vibration source is changed orthogonally into two directions. However, according to the twenty-fourth embodiment, the ultrasonic vibration is changed into a single direction.

There is a fixed part 501. There is also a movable part 503, which can be floated in Z axis direction above the fixed part 503, and is movable in an arbitrary two-dimensional direction in X and Y axes.

The movable part 503 comprises, a movable part body 505, and a vibrator 509 attached to the movable part body 505 through a pillar member 507. The vibrator 509 comprises, a Langevin type ultrasonic transducer 511, an L-shaped vibrating direction changing member 513, and a vibration plate 515.

According to the above structure, when the Langevin type ultrasonic transducer 511 generates vibration, because of sympathetic vibration, the direction of the vibration is changed into a single direction perpendicular to that of the original vibration by the L-shaped vibrating direction changing member 513, whereby the vibration plate 515 vibrates in Z axis direction. This vibration of the vibration plate 515 generates the floating force, whereby the movable part 503 is floated in Z axis direction.

Although the driving means will not be explained, where a driving means is provided separately, it is possible to move in an arbitrary two-dimensional direction in X and Y axes.

Therefore, according to the twenty-fourth embodiment, substantially the same effect as that of the twenty-third embodiment as discussed above can be accomplished.

Although the twenty-third embodiment is explained with reference to a single-axis actuator as an example, where two single-axis actuators are stacked, it is possible to serve as an actuator for two axes, i.e. X and Y axes.

Also, although the combined structure of the momentum generating device with the stopping device has been explained as an example of a driving method, the present embodiment is not limited to such a structure.

Further, in the twenty-fourth embodiment, the L-shaped vibrating direction changing member can be changed to be in a cross shape.

Where a viscous-elastic material such as rubber is provided between the pillar members and the vibrator according to the twenty-third or twenty-fourth embodiment, it is possible to further reduce the interference with the vibrator.

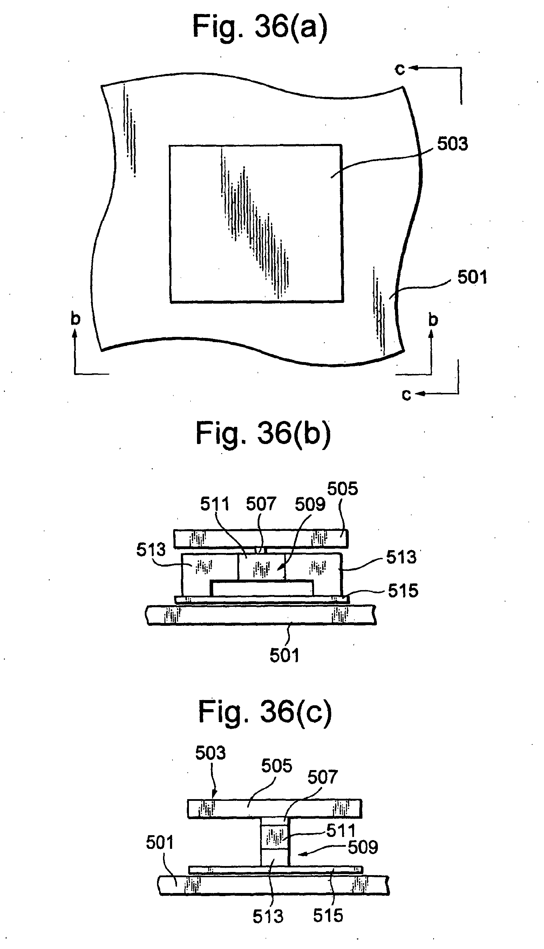

Now a twenty-fifth embodiment of the present invention will be explained with reference to Fig. 36. According to the twenty-fifth embodiment, the rigidity of the movable part body 505 of the twenty-fourth embodiment has been improved. In particular, the vibrator 509 is in a symmetrical shape, whereby the rigidity of the movable part body 505 may be improved.

For reference, the identical numerals are allotted to the elements identical with those of the twenty-fourth embodiment, and the explanation thereof will not be made.

INDUSTRIAL APPLICABILITY

As above discussed, the present invention relates to the ultrasonic levitation device and the levitation device according to the present invention, the linear movement guiding function is provided without requiring any complicated structure, and the floating stability and floating rigidity may be improved without requiring large-sizing of the device. In addition, the present invention enables ultrasonic vibration at large vibration amplitude, whereby the stability of ultrasonic levitation may be further improved. The present invention may also drive the movable part effectively, and it is possible to make the stop positioning at a desired position with excellent preciseness. The present invention may lower the height of the movable part, whereby the down-sizing of the device and the improvement of the movement stability can be accomplished.

**Claims**

1. An ultrasonic levitation device comprising:

   a fixed part; and
   a movable part which movably installed on said fixed part,
   so that said movable part can be floated through floating surfaces by ultrasonic vibration of said fixed part or said movable part, wherein, thin ultrasonic vibrators are provided on said fixed part or said movable part.

2. The ultrasonic levitation device as claimed in claim 1, wherein:

   said floating surfaces are formed in sloped surfaces.

3. The ultrasonic levitation device as claimed in claim 2, further comprising:

   fixed part guides at said fixed part; and
   movable part guides at said movable part corresponding to said fixed part guides, wherein,
   said fixed part guides are in a form of recessed or protruded shape, and said movable part guides are in a form of protruded or recessed shape.

4. The ultrasonic levitation device as claimed in claim 2 or claim 3, further comprising:

   a pair of fixed part guides for guiding said movable part on the right and left sides, wherein,
   said pair of fixed part guides is provided with sloped floating surfaces spreading in the upward direction, and
   said movable part guides are provided with sloped floating surfaces on the right and left sides confronting said sloped floating surfaces of said pair of fixed side guides.

5. The ultrasonic levitation device as claimed in claim 3, wherein:

   said fixed part guides are in a form of recessed or protruded shape by two sloped surfaces, and said movable part guides are in a form of protruded or recessed shape by two sloped surfaces.

6. The ultrasonic levitation device as claimed in any one claim of claims 1 to 5, wherein:

   said fixed part or said movable part further comprising piezoelectric members.

7. The ultrasonic levitation device as claimed in any one claim of claims 1 to 6, wherein:

   said fixed part or said movable part is further provided with ultrasonic vibration sources by stacking piezoelectric elements.

8. The ultrasonic levitation device as claimed in any one claim of claims 1 to 7, wherein:

   a vibrator of said movable part makes ultrasonic vibration,
   said vibrator further comprising, a vibration plate making ultrasonic vibration, and a pair of movable part guides provided on the right and left sides of said vibration plate,
   so that the thickness of said vibration plate and the thickness of said pair of movable part guides are different from each other.

9. The ultrasonic levitation device as claimed in claim 8, wherein:

   said vibration plate further comprising a piezoelectric material.

10. The ultrasonic levitation device as claimed in claim 8 or claim 9, wherein:

said vibration plate and said pair of movable part guides are produced as separate parts.

11. The ultrasonic levitation device as claimed in any one claim of claims 1 to 10, wherein:

said movable part further comprising a movable part body integrated with said vibrator through pillar members,
in a form that said pillar members are positioned along the center axis of said vibrator.

12. The ultrasonic levitation device as claimed in claim 11, wherein:

said pillar members are connected to projecting parts positioned to be projecting from ends of said vibrator.

13. The ultrasonic levitation device as claimed in claim 12, wherein:

the width of connecting parts between said projecting parts and said vibration plates of said vibrator is narrower than the width of said projecting parts.

14. The ultrasonic levitation device as claimed in any one claim of claims 1 to 13, further comprising:

sticking preventing projections at said fixed part or said movable part.

15. The ultrasonic levitation device as claimed in any one claim of claims 11 to 14, wherein:

all or part of said pillar members comprising a viscous-elastic material.

16. The ultrasonic levitation device as claimed in claim 1, wherein:

said ultrasonic vibrators are provided by stacking piezoelectric elements.

17. The ultrasonic levitation device as claimed in claim 16, wherein:

said ultrasonic vibrators are provided not less than two at said fixed part or said movable part.

18. The ultrasonic levitation device as claimed in claim 17, wherein:

said ultrasonic vibrators are provided not less than three.

19. The ultrasonic levitation device as claimed in claim 17 or claim 18, wherein:

said plurality of ultrasonic vibrators is provided on the same circular line.

20. The ultrasonic levitation device as claimed in claim 1, wherein:

said ultrasonic vibrators are plate oscillating devices attached to said fixed part or said movable part through pillar members.

21. The ultrasonic levitation device as claimed in claim 20, wherein:

said plate oscillating devices are provided with bimorph piezoelectric elements or unimorph piezoelectric elements connected to vibration plates.

22. The ultrasonic levitation device as claimed in claim 20 or claim 21, wherein:

said pillar members are provided not less than two.

23. The ultrasonic levitation device as claimed in any one claim of claims 20 to 22, further comprising:

ribs on said plate oscillating devices.

24. The ultrasonic levitation device as claimed in any one claim of claims 20 to 23, wherein:

the space between said pillar members or said ribs is set to be an integral multiple number of approximately half of a vibration wavelength.

25. The ultrasonic levitation device as claimed in any one claim of claims 20 to 24, wherein:

said pillar members or said ribs are positioned at inner positions from outer edges of said plate oscillating devices.

26. The ultrasonic levitation device as claimed in claim 25, wherein:

the space between said pillar members or said ribs and said outer edge of said plate oscillating devices is approximately quarter of or approximately multiple number of $\{1/4 + (1/2) \times n\}$ of a vibration wavelength, on condition that symbol "n" is set to be an integral number.

27. The ultrasonic levitation device as claimed in claim 1, wherein:

the vibrating direction of ultrasonic vibration at said fixed part or said movable part is changed, through a vibrating direction changing means.

28. The ultrasonic levitation device as claimed in claim 27, wherein:

said vibrating direction changing means changes the vibrating direction of ultrasonic vibration orthogonally.

29. The ultrasonic levitation device as claimed in claim 28, wherein:

the direction of main vibration changed by said vibrating direction changing means is in one direction.

30. The ultrasonic levitation device as claimed in claim 29, wherein:

said vibrating direction changing means further comprising a vibrating direction changing member in a form of letter L shape.

31. The ultrasonic levitation device as claimed in claim 28, wherein:

the direction of main vibration changed by said vibrating direction changing means is in two directions.

32. The ultrasonic levitation device as claimed in claim 31, wherein:

said vibrating direction changing means further comprising a vibrating direction changing member in a form of cross shape.

33. The ultrasonic levitation device as claimed in any one claim of claims 27 to 32, further comprising:

vibrators provided with Langevin type ultrasonic transducers or sheet lamination type piezoelectric elements at said fixed part or said movable part.

34. The ultrasonic levitation device as claimed in claim 33, wherein:

said Langevin type ultrasonic transducers or said sheet lamination type piezoelectric elements are in a form of prism shape.

35. The ultrasonic levitation device as claimed in any one claim of claims 27 to 34, wherein:

said movable part further comprising a movable part body through pillar members, in a form that said pillar members are positioned substantially at the center of said vibrators or substantially at the center of said vibrating direction changing means.

# Fig. 1(a)

# Fig. 1(b)

# Fig. 2(a)

# Fig. 2(b)

## Fig. 3(a)

## Fig. 3(b)

# Fig. 4(a)

# Fig. 4(b)

# Fig. 5(a)

# Fig. 5(b)

# Fig. 6(a)

# Fig. 6(b)

# Fig. 7(a)

# Fig. 7(b)

# Fig. 8(a)

# Fig. 8(b)

# Fig. 9(a)

# Fig. 9(b)

# Fig. 10(a)

# Fig. 10(b)

# Fig. 11(a)

# Fig. 11(b)

# Fig. 12(a)

# Fig. 12(b)

# Fig. 12(c)

# Fig. 13(a)

# Fig. 13(b)

# Fig. 13(c)

# Fig. 13(d)

# Fig. 14

## Fig. 15

MOMENTUM GENERATING DEVICE

a    b

DISPLACEMENT

SPEED

STOP AREA                    STOP AREA

ACCELERATION

STOPPING DEVICE

ON

OFF

TIME ⟶

SYMMETRICAL DISPLACEMENT DRIVING WAVEFORM

# Fig. 16

MOMENTUM
GENERATING
DEVICE

DISPLACEMENT

SPEED

STOP
AREA

STOP
AREA

ACCELERATION

STOPPING
DEVICE

ON

OFF

TIME ⟶

UNSYMMETRICAL DISPLACEMENT
DRIVING WAVEFORM

# Fig. 17(a)

# Fig. 17(b)

# Fig. 18(a)

# Fig. 18(b)

# Fig. 19(a)

# Fig. 19(b)

# Fig. 19(c)

# Fig. 20(a)

# Fig. 20(b)

# Fig. 20(c)

# Fig. 21(a)

# Fig. 21(b)

# Fig. 22(a)

# Fig. 22(b)

# Fig. 23(a)

# Fig. 23(b)

# Fig. 24(a)

# Fig. 24(b)

# Fig. 25(a)

# Fig. 25(b)

# Fig. 26(a)

# Fig. 26(b)

# Fig. 26(c)

# Fig. 27(a)

305  302  303  307

b                                    b

321

301

# Fig. 27(b)

302

305        321   303 307

309

301

# Fig. 28(a)

# Fig. 28(b)

# Fig. 29(a)

# Fig. 29(b)

# Fig. 30(a)

# Fig. 30(b)

# Fig. 31(a)

# Fig. 31(b)

# Fig. 32(a)

# Fig. 32(b)

Fig. 33(a)

Fig. 33(b)

Fig. 33(c)

Fig. 33(d)

Fig. 34(a)

Fig. 34(b)

Fig. 34(c)

Fig. 34(d)

# Fig. 35(a)

# Fig. 35(b)

# Fig. 35(c)

# Fig. 36(a)

# Fig. 36(b)

# Fig. 36(c)

## INTERNATIONAL SEARCH REPORT

| | International application No. |
|---|---|
| | PCT/JP03/02830 |

**A. CLASSIFICATION OF SUBJECT MATTER**
Int.Cl⁷ B65G27/16, 54/00

According to International Patent Classification (IPC) or to both national classification and IPC

**B. FIELDS SEARCHED**

Minimum documentation searched (classification system followed by classification symbols)
Int.Cl⁷ B65G27/00-27/34, 54/00-54/02

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 11-208887 A (Kaijo Corp.), 03 August, 1999 (03.08.99), (Family: none) | 1-7,11-13, 15-18,20-22, 25 |
| A | | 8-10,14,19, 23,24,26-35 |
| Y | US 5810155 A (Kaijo Corp.), 22 September, 1998 (22.09.98), & JP 7-137824 A & US 5890580 A | 1-7,11-13, 15-18,20-22, 25 |
| A | | 8-10,14,19, 23,24,26-35 |
| Y | JP 63-109512 A (Yokogawa Electric Corp.), 14 May, 1988 (14.05.88), (Family: none) | 1-7,1-13, 15-18,20-22, 25 |
| A | | 8-10,14,19, 23,24,26-35 |

☒ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 09 June, 2003 (09.06.03) | 24 June, 2003 (24.06.03) |

| Name and mailing address of the ISA/<br>Japanese Patent Office | Authorized officer |
|---|---|
| Facsimile No. | Telephone No. |

Form PCT/ISA/210 (second sheet) (July 1998)

## INTERNATIONAL SEARCH REPORT

| International application No. |
| --- |
| PCT/JP03/02830 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 3-139180 A  (Brother Industries, Ltd.), 13 June, 1991 (13.06.91), (Family: none) | 6,7,11-13, 15-18,21,22, 25 |
| Y | JP 7-196127 A  (Kaijo Corp.), 01 August, 1995 (01.08.95), (Family: none) | 11-13,15, 20-22,25 |

Form PCT/ISA/210 (continuation of second sheet) (July 1998)